(19) Europäisches Patentamt
European Patent Office
Office européen des brevets

(11) **EP 4 085 244 B1**

(12) **FASCICULE DE BREVET EUROPEEN**

(45) Date de publication et mention de la délivrance du brevet:
**27.12.2023 Bulletin 2023/52**

(21) Numéro de dépôt: **20839345.4**

(22) Date de dépôt: **28.12.2020**

(51) Classification Internationale des Brevets (IPC):
**G01N 21/27** *(2006.01)*   **G01N 21/552** *(2014.01)*
**G01N 33/00** *(2006.01)*

(52) Classification Coopérative des Brevets (CPC):
**G01N 21/274;** G01N 21/553; G01N 21/783;
G01N 2201/1214; Y02A 50/20

(86) Numéro de dépôt international:
**PCT/EP2020/087942**

(87) Numéro de publication internationale:
**WO 2021/136761 (08.07.2021 Gazette 2021/27)**

(54) **PROCEDE DE RECALIBRATION D'UN NEZ ELECTRONIQUE**

VERFAHREN ZUR REKALIBRIERUNG EINER ELEKTRONISCHEN NASE

METHOD FOR RECALIBRATING AN ELECTRONIC NOSE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2019 FR 1915729**

(43) Date de publication de la demande:
**09.11.2022 Bulletin 2022/45**

(73) Titulaire: **Aryballe**
**38000 Grenoble (FR)**

(72) Inventeurs:
• **HERRIER, Cyril**
**38000 GRENOBLE (FR)**
• **HARBINE, David**
**38000 GRENOBLE (FR)**

• **CARITU, Yanis**
**38000 GRENOBLE (FR)**

(74) Mandataire: **Ipside**
**6, Impasse Michel Labrousse**
**31100 Toulouse (FR)**

(56) Documents cités:
**WO-A1-2018/158458    JP-A- 2016 090 257**
**JP-A- 2016 138 782**

• **BRENET ET AL.: "Highly-Selective Optoelectronic Nose based on Surface Plasmon Resonance Imaging for Sensing Gas Phase Volatile Organic Compounds", ANAL. CHEM., vol. 90, no. 16, 2018, pages 9879-9887, XP002800118, cité dans la demande**

**Description**

## DOMAINE TECHNIQUE

Le domaine de l'invention est celui des nez électroniques permettant de caractériser des composés d'intérêt contenus dans un échantillon gazeux introduit dans une chambre de mesure, laquelle présente, au cours de la phase de caractérisation, une variation d'humidité relative.

## ÉTAT DE LA TECHNIQUE ANTÉRIEURE

La capacité d'analyser et de caractériser des composés d'intérêt contenus dans des échantillons gazeux, par exemple des molécules odorantes ou des composés organiques volatils, est une problématique de plus en plus importante dans différents domaines, notamment dans ceux de la santé, de l'industrie agroalimentaire, de l'industrie de la parfumerie (senteurs), du confort olfactif dans les endroits confinés publics ou privés (automobile, hôtellerie, lieux partagés...), etc... La caractérisation des composés d'intérêt présents dans un échantillon gazeux est effectuée par un système de caractérisation appelé « nez électronique ».

Différentes approches de caractérisation existent, qui se distinguent entre elles notamment par la nécessité ou non d'avoir à « marquer » au préalable les composés d'intérêt ou les récepteurs par un agent de révélation. A la différence par exemple de la détection par fluorescence qui nécessite d'avoir recours à de tels marqueurs, la détection par résonance plasmonique de surface (SPR pour *Surface Plasmon Resonance,* en anglais) est un exemple de techniques dites sans marqueur (*label free,* en anglais).

La technique de caractérisation SPR peut être mise en oeuvre par un nez électronique utilisant la technologie d'imagerie SPR, les composés d'intérêt étant alors contenus dans un échantillon gazeux et venant interagir par adsorption/désorption avec des récepteurs situés dans une pluralité de sites sensibles distincts. Cette technique de caractérisation consiste à détecter en temps réel un signal optique, associé à chacun des sites sensibles, représentatif de la variation temporelle de l'indice de réfraction local du fait des interactions d'adsorption/désorption des composés d'intérêt avec les récepteurs.

Dans la mesure où on ne connaît pas *a priori* l'affinité chimique ou physique d'interaction des composés d'intérêt avec les récepteurs, la caractérisation des composés d'intérêt revient alors à déterminer une valeur d'équilibre (stationnaire) d'un paramètre représentatif des interactions d'adsorption/désorption des composés d'intérêt avec les récepteurs, ici représentatif de la variation temporelle de l'indice de réfraction local pour chacun des sites sensibles. On obtient ainsi un motif d'interaction, ou une signature, qui caractérise les composés d'intérêt. En effet, les interactions d'adsorption/désorption des composés d'intérêt sur des sites sensibles (surfaces fonctionnalisées) bénéficiant de caractéristiques d'adsorption différenciées permettent de rendre compte des molécules présentes dans le gaz qui ont été accrochées à la surface des différents sites sensibles.

A ce titre, les figures 1A et 1B illustrent un exemple de nez électronique tel que décrit dans la demande WO2018/158458. Ce type de nez électronique 1 comporte, d'une manière générale, un dispositif fluidique 10 d'alimentation en composés cibles, un dispositif de mesure 20 par imagerie SPR, et une unité de traitement (non représentée).

Le dispositif de mesure 20 comporte une chambre de mesure 21 destinée à recevoir l'échantillon gazeux, dans laquelle se situe un support de mesure 22 sur lequel est située une matrice de sites sensibles $23_k$. Le support de mesure 22 est formé d'une couche métallique sur laquelle sont fixés différents récepteurs adaptés à interagir avec les composés d'intérêt, les différents récepteurs étant disposés de manière à former des sites sensibles $23_k$ distincts les uns des autres. Ces récepteurs sont alors situés à l'interface entre la couche métallique et un milieu diélectrique, ici un milieu gazeux.

Ce dispositif de mesure 20 comporte en outre une source lumineuse 24 d'un signal optique d'excitation et un capteur d'image 25. Au moins une lentille de focalisation ou collimation et au moins un polariseur peuvent être prévus sur le chemin optique entre la source lumineuse 24 et le capteur d'image 25, de manière connue. La source lumineuse 24 est adaptée à émettre le signal optique d'excitation en direction du support de mesure 22, suivant un angle de travail $\theta_R$ permettant d'y générer des plasmons de surface. La partie réfléchie du signal optique d'excitation, formant un signal optique de mesure, est ensuite détectée par le capteur d'image 25. L'intensité du signal optique de mesure dépend localement de l'indice de réfraction du support de mesure 22, qui dépend lui-même des plasmons de surface générés et de la quantité de matière située au niveau de chaque site sensible $23_k$, cette quantité de matière variant au cours du temps au grès des interactions entre les composés sensibles et les récepteurs.

L'unité de traitement du nez électronique 1 est adaptée à analyser les « sensorgrammes », c'est-à-dire les signaux correspondant à l'évolution temporelle du paramètre représentatif des interactions d'adsorption/désorption des composés d'intérêt avec les récepteurs de chacun des différents sites sensibles $22_k$, dans le but d'en extraire les informations de la cinétique d'interaction (adsorption et désorption) des composés d'intérêt avec les récepteurs. Ces sensorgrammes peuvent être des signaux de mesure $S_k(t)$ correspondant à l'intensité du signal optique de mesure détecté en temps réel par le capteur d'image 25 de chacun des sites sensibles $23_k$, ou être des signaux dits utiles $Su_k(t)$ correspondant à l'évolution temporelle de la variation $\Delta\%R_k(t)$ de la réflectivité associée à chacun des sites sensibles $23_k$. La réflectivité %R est définie comme le rapport entre l'intensité du signal optique de mesure détecté par le capteur d'image 25 sur l'intensité du signal optique d'excitation émis par la source lumineuse 24. La variation de réflectivité $\Delta\%R$ est obtenue en soustrayant à l'évolution temporelle de la réflectivité $\%R(t)$ une valeur de référence (*baseline*, en anglais) associée au gaz seul présent à l'intérieur de la chambre de mesure, indépendamment des composés d'intérêt.

Aussi, les signaux utiles $Su_k(t)$ associés aux différents sites sensibles $23_k$ présentent une même valeur initiale stationnaire, de préférence sensiblement égale à zéro, avant l'introduction des composés d'intérêt dans la chambre de mesure 21. Ainsi, cette valeur de référence *(baseline)* qui traduit l'impact du seul gaz (sans les composés d'intérêt) sur chacun des sites sensibles $23_k$ est soustraite au signal de mesure $S_k(t)$ correspondant. L'intensité des signaux utiles $Su_k(t)$ traduit ainsi l'impact des seuls composés d'intérêt sur les récepteurs de la chambre de mesure 4.

Enfin, le dispositif fluidique d'alimentation 10 est adapté à introduire les composés d'intérêt dans la chambre de mesure 21 dans des conditions permettant l'analyse des sensorgrammes et donc la caractérisation des composés d'intérêt. A ce titre, l'article de Brenet et al. intitulé Highly-Selective Optoelectronic Nose based on Surface Plasmon Resonance Imaging for Sensing Gas Phase Volatile Organic Compounds, Anal. Chem. 2018, 90, 16, 9879-9887, décrit un procédé de caractérisation d'un échantillon gazeux au moyen d'un nez électronique 1 de type à imagerie SPR.

Le procédé de caractérisation consiste à alimenter la chambre de mesure en un échantillon gazeux de telle manière que la cinétique d'interaction entre les composés d'intérêt et les récepteurs atteigne un régime stationnaire d'équilibre.

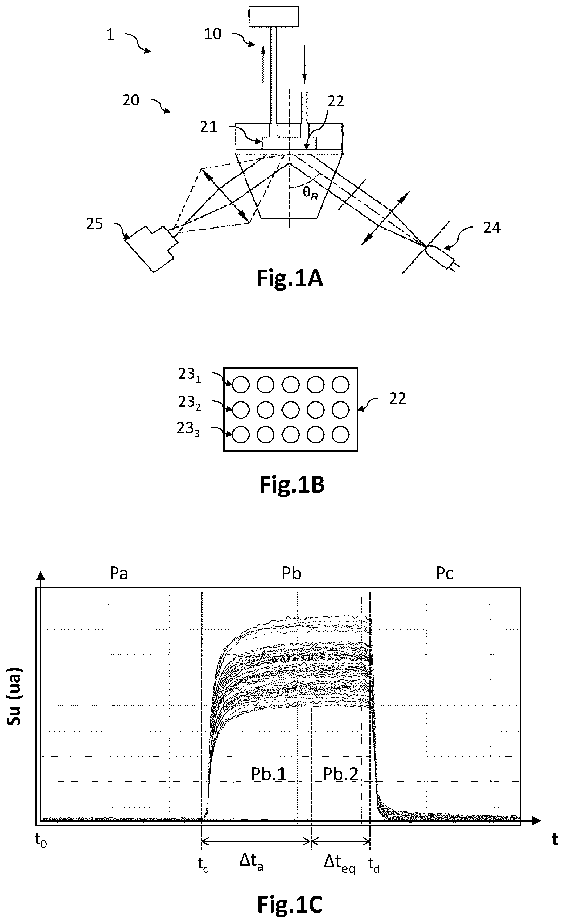

Plus précisément, comme l'illustre la figure 1C, l'étape d'injection fluidique comporte successivement :

- une première phase Pa dite initiale, dans laquelle un gaz de référence seul, sans les composés d'intérêt, est injecté dans la chambre de mesure. Ce gaz de référence est généralement identique au gaz porteur de l'échantillon gazeux ;
- une deuxième phase Pb dite de caractérisation, dans laquelle l'échantillon gazeux, formé du gaz porteur et des composés d'intérêt, est injecté dans la chambre de mesure ; et
- une troisième phase Pc dite de dissociation, dans laquelle le gaz de référence seul est à nouveau injecté dans la chambre de mesure, de manière à évacuer les composés d'intérêt hors de la chambre de mesure.

La phase initiale Pa permet d'acquérir la valeur de référence *(baseline),* mentionnée plus haut, qui est destinée à être ensuite soustraite aux signaux de mesure $S_k(t)$ pour obtenir des signaux utiles $Su_k(t)$ (autrement dit l'évolution temporelle de la variation de réflectivité

$\Delta\%R_k(t)$ pour chaque site sensible). Comme indiqué précédemment, cette étape d'injection fluidique est effectuée de sorte que les sensorgrammes mettent en évidence la présence d'un régime transitoire d'assimilation suivi d'un régime stationnaire d'équilibre. Lorsque ce régime stationnaire d'équilibre est atteint, les valeurs d'équilibre (stationnaires) des signaux utiles $Su_k(t)$ sont extraites par l'unité de traitement, et définissent la signature des composés d'intérêt.

Or, il apparaît que l'humidité relative à l'intérieur de la chambre de mesure a un impact sur l'intensité du signal optique de mesure, comme l'indique l'article de Shao et al. intitulé Mechanism and Characteristics of Humidity Sensing with Polyvinyl Alcohol-Coated Fiber Surface Plasmon Résonance Sensor, Sensors 2018, 18, 2029. Dans cet article, les auteurs utilisent un capteur SPR comme d'un capteur d'humidité. Cependant, dans le cadre d'un procédé de caractérisation des composés d'intérêt par un nez électronique, la variation d'humidité relative dans la chambre de mesure forme un biais de mesure dégradant la qualité de la caractérisation. De plus, dans le cas où l'humidité relative varie sur des temps longs, et donc varie d'une caractérisation à l'autre pour les mêmes composés d'intérêt et les mêmes conditions opératoires, cela induit une dérive temporelle qui rend les signatures de ces mêmes composés d'intérêt différentes les unes des autres.

## EXPOSÉ DE L'INVENTION

L'invention a pour objectif de remédier au moins en partie aux inconvénients de l'art antérieur, et plus particulièrement de proposer un procédé de recalibration d'un nez électronique adapté à caractériser des composés cibles présents dans un échantillon gazeux introduit dans une chambre de mesure, celle-ci comportant au moins un site sensible ayant des récepteurs avec lesquels les composés cibles sont aptes à interagir par adsorption/désorption, le nez électronique comportant une unité de traitement dans laquelle est préenregistrée une première fonction de correction exprimant une variation d'un paramètre représentatif du signal de mesure associé à un gaz de référence en fonction d'une humidité relative, le procédé comportant les étapes suivantes :

- injections successives, dans la chambre de mesure, de gaz de référence ne contenant pas de composés cibles, les gaz de référence injectés les uns après les autres présentant différentes valeurs d'humidité relative non nulles prédéterminées ;
- détermination, au cours de chaque injection, d'un signal de mesure représentatif des interactions des récepteurs avec le gaz de référence présent, à différents instants de mesure, en réponse à un signal d'excitation émis au niveau du site sensible, puis détermination, pour chaque gaz de référence, d'une valeur de référence représentative du signal de mesure déterminé, associée à l'humidité relative du gaz de référence présent ;

- détermination d'une deuxième fonction de correction exprimant une variation d'un paramètre représentatif du signal de mesure associé au gaz de référence en fonction de l'humidité relative, à partir des valeurs de référence déterminées et des valeurs d'humidité relative ($\varphi$) prédéterminées, la deuxième fonction de correction étant ensuite enregistrée dans l'unité de traitement en remplacement de la première fonction de correction.

La valeur de référence peut être une moyenne d'au moins une partie du signal de mesure correspondant ; et le paramètre représentatif du signal de mesure peut être égal à la valeur de référence.

L'étape d'injections successives peut comporter au moins trois injections de différents gaz de référence les uns après les autres, à partir de différents réservoirs.

L'étape d'injections successives peut comporter une injection d'un même gaz de référence, provenant d'un réservoir dans lequel il présente une valeur initiale d'humidité relative et passant, avant de rejoindre la chambre de mesure dans un réservoir partiellement rempli par un liquide hydrophile, de sorte que le gaz de référence introduit dans la chambre de mesure présente une humidité relative qui diminue de la valeur initiale à une valeur finale en passant par une valeur intermédiaire.

L'étape d'injections successives peut comporter plusieurs cycles d'injection, chaque cycle étant formé d'une injection d'un premier gaz de référence présentant une première humidité relative et d'une injection de différents deuxièmes gaz de référence présentant différentes deuxièmes humidités relatives, de manière à obtenir plusieurs écarts d'humidité relative entre chaque deuxième humidité relative et la première humidité relative, les écarts d'humidité relative étant différents entre eux.

Le nez électronique peut comporter une première source du premier gaz de référence présentant une première humidité relative, et différentes deuxièmes sources de deuxièmes gaz de référence présentant les différentes deuxièmes humidités relatives.

Le paramètre représentatif du signal de mesure peut être égal à un écart de référence entre des valeurs de référence associés au premier gaz de référence et à chaque deuxième gaz de référence, chaque écart de référence étant différents entre eux.

L'invention porte également sur un procédé d'utilisation du nez électronique, comportant plusieurs phases de caractérisation des composés cibles, dont une première phase de caractérisation effectuée avant une recalibration mise en oeuvre par le procédé selon l'une quelconque des caractéristiques précédentes, et une deuxième phase de caractérisation effectuée après ladite recalibration, chaque phase de caractérisation comportant les étapes suivantes :

- injection dans la chambre de mesure, pendant une première phase Pa, d'un gaz de référence ne contenant pas les composés cibles, puis pendant une deuxième phase Pb, d'un échantillon gazeux comportant lesdits composés cibles ;

- détermination, au cours de l'étape d'injection, d'un signal de mesure représentatif des interactions des récepteurs avec au moins le gaz présent, à différents instants de mesure, en réponse à un signal d'excitation émis au niveau du site sensible ;
- mesure de valeurs $\varphi_1$, $\varphi_2$ d'humidité relative respectivement lors des première et deuxième phases Pa, Pb dans la chambre de mesure, $\varphi_2$ étant différente de $\varphi_1$ ;
- détermination d'un paramètre correctif associé au site sensible, à partir d'au moins la valeur mesurée $\varphi_2$ d'humidité relative et d'une fonction de correction prédéterminée ($f_k$, $h_k$) exprimant une variation d'un paramètre représentatif du signal de mesure associé au gaz de référence en fonction de l'humidité relative ;
- détermination d'un signal utile par correction du signal de mesure associé à l'échantillon gazeux, à partir d'au moins le paramètre correctif déterminé ;
- la première phase de caractérisation utilisant une première fonction de correction préenregistrée ; la recalibration déterminant une deuxième fonction de correction ; la deuxième phase de caractérisation utilisant la deuxième fonction de correction déterminée.

L'invention porte également sur un nez électronique de caractérisation de composés cibles, adapté à la mise en oeuvre du procédé de recalibration selon caractéristiques précédentes et du procédé d'utilisation selon caractéristique précédente, comportant :

- un dispositif de mesure, comportant : une chambre de mesure, adaptée à recevoir un échantillon gazeux contenant des composés d'intérêt à caractériser, et comportant au moins un site sensible ayant des récepteurs avec lesquels les composés cibles sont aptes à interagir par adsorption/désorption ; une unité de mesure, adaptée à déterminer un signal de mesure représentatif des interactions des récepteurs avec au moins le gaz présent, à différents instants de mesure, en réponse à un signal d'excitation émis au niveau du site sensible ; un capteur d'humidité, adapté à mesurer des valeurs d'humidité relative du gaz présent dans la chambre de mesure ;
- un dispositif fluidique d'alimentation, comportant : une source d'un gaz de référence, raccordée à la chambre de mesure ; une source de composés cibles, raccordée à la chambre de mesure, ledit échantillon gazeux étant formé d'un gaz et des composés cibles ;
- un dispositif fluidique de recalibration, comportant au moins une source d'au moins un gaz de référence, adaptée à alimenter la chambre de mesure avec des gaz de référence présentant différentes valeurs d'humidité relative ;
- une unité de traitement, adaptée à :

○ déterminer un paramètre correctif à partir d'au moins une valeur mesurée de l'humidité relative, et d'une fonction de correction prédéterminée et associée au site sensible, exprimant une variation d'un paramètre représentatif du signal de mesure associé à un gaz de référence en fonction de l'humidité relative mesurée ;
○ déterminer un signal utile par correction du signal de mesure associé à l'échantillon gazeux à partir d'au moins le paramètre correctif déterminé ;
○ caractériser les composés cibles à partir du signal utile déterminé ;
○ déterminer la fonction de correction, à partir des différentes valeurs d'humidité relative du gaz de référence présent dans la chambre de mesure, et des signaux de mesure correspondants.

**BRÈVE DESCRIPTION DES DESSINS**

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

les figures 1A et 1B, déjà décrites, sont des vues schématiques et partielles, en coupe (fig.1A) et en vue de dessus (fig.1B), d'un nez électronique à imagerie SPR selon un exemple de l'art antérieur et des sites sensibles du support de mesure ;

la figure 1C est un exemple de sensorgrammes $Su_k(t)$ mesurés par le nez électronique selon l'exemple de l'art antérieur, ces sensorgrammes correspondant ici à l'évolution temporelle de la variation de la réflectivité $\Delta\%R_k(t)$ associée à chacun des sites sensibles ;

la figure 2A est un exemple de trois motifs d'interaction (signatures) obtenus par un procédé de caractérisation selon l'art antérieur, mettant en évidence la dégradation de la caractérisation de composés d'intérêt du fait d'une différence d'humidité relative dans la chambre de mesure entre la phase initiale Pa et la phase de caractérisation Pb ;

la figure 2B est un exemple de différents signaux de mesure $S_k(t)$ obtenus par un nez électronique à imagerie SPR pour différentes situations d'humidité relative $\varphi$ dans la chambre de mesure : i.e. dans le cas où l'humidité relative est constante et égale à $\varphi 1$, dans le cas où l'humidité relative est constante et

égale à $\varphi 2$ différente de $\varphi 1$, et dans le cas où l'humidité relative passe de $\varphi 1$ à $\varphi 2$ entre la phase initiale P1 et la phase de caractérisation P2 ;

la figure 2C est une vue schématique et partielle d'un nez électronique à imagerie SPR selon un mode de réalisation dans lequel il est adapté à corriger un biais de mesure associé à une variation d'humidité relative lors de la phase de caractérisation ;

la figure 3 est un organigramme d'un procédé de caractérisation selon un premier mode de réalisation ;

la figure 4A est un exemple d'une fonction de calibration $h_k$ exprimant l'évolution d'une valeur de référence $\tilde{S}_k^b$ associée à un gaz de référence (sans les composés d'intérêt) en fonction de l'humidité relative $\varphi$ ;

la figure 4B illustre les trois motifs d'interaction (signatures) déjà illustrés sur la fig.2A, ainsi qu'un motif d'interaction obtenu par le procédé de caractérisation selon le premier mode de réalisation ;

la figure 5 est un organigramme d'un procédé de caractérisation selon un deuxième mode de réalisation ;

la figure 6A est un exemple d'une différence $\Delta\tilde{S}_k(t)$ entre des signaux de mesure $S_k(t)$ pour différents cycles d'injection de différents gaz de référence (sans les composés d'intérêt), chaque cycle comportant une injection du premier gaz de référence d'humidité relative $\varphi_{1,ref}$ constante au cours des cycles, suivie d'une injection d'au moins un deuxième gaz de référence d'humidité relative $\varphi_{j=2,3...}$ qui varie au cours des cycles ;

la figure 6B illustre la différence d'humidité relative $\Delta\varphi_j$ au cours des cycles illustrés sur la fig.6A ;

la figure 6C est un exemple d'une fonction de calibration $f_k$ exprimant l'évolution de la différence de valeur de référence $\Delta\tilde{S}_k^b$ en fonction de la différence d'humidité relative $\Delta\varphi$ ;

la figure 7A est une vue schématique et partielle d'un nez électronique selon un mode de réalisation dans lequel il est configuré pour effectuer une phase de recalibration ;

la figure 7B est un organigramme d'un procédé d'utilisation du nez électronique illustré sur la fig.7A mettant en oeuvre une phase de recalibration ;

la figure 7C est une vue schématique d'une partie d'un nez électronique selon une variante de réalisation ;

la figure 8A est une vue schématique et partielle d'un nez électronique selon un autre mode de réalisation dans lequel il est configuré pour effectuer une phase de recalibration ;

la figure 8B est un organigramme d'un procédé d'utilisation du nez électronique illustré sur la fig.8A mettant en oeuvre une phase de recalibration.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur la caractérisation de composés d'intérêt présents dans un gaz porteur formant un échantillon gazeux à analyser. La caractérisation est effectuée au moyen d'un système d'analyse appelé 'nez électronique', lequel comporte : un dispositif de mesure avec un capteur d'humidité ; un dispositif fluidique d'alimentation en composés cibles ; et une unité de traitement. Comme détaillé plus loin, le nez électronique comporte également un dispositif fluidique de recalibration, de sorte que le nez électronique est adapté à effectuer une phase de recalibration permettant d'actualiser la fonction de correction utilisée pour corriger le biais de mesure lié à une variation d'humidité relative dans la chambre de mesure.

A titre d'illustration, le nez électronique utilise la technologie de mesure par résonance plasmonique de surface (SFR). Le dispositif de mesure comporte alors un capteur optique qui peut être un capteur d'image, la chambre de mesure ayant alors une pluralité de sites sensibles $6_k$ (k étant le rang du site sensible considéré), ou comporte un capteur optique qui peut être un photodétecteur, auquel cas la mesure est réalisée par la recherche de l'angle de réflectivité minimal, cet angle étant représentatif de la variation d'indice lorsqu'une quantité de matière est déposée sur une surface élémentaire. La technologie SPR utilise souvent un capteur d'image (SPRI pour SPR Imaging) qui permet de mesurer les quantités de matières déposées en tout point d'une surface, l'angle optimal de réglage du capteur étant un angle de réflectivité minimale moyen, et les niveaux de gris de l'image étant représentatives des variations d'indice optique liées aux dépôts superficiels de matière. En variante, d'autres technologies de mesure peuvent être mises en oeuvre, telles que la mesure par résonateurs électromagnétiques de type MEMS ou NEMS (par exemple, décrit dans le document EP3184485). Plus largement, le dispositif de mesure peut être de type résistif, piézoélectrique, mécanique, acoustique ou optique.

D'une manière générale, par caractérisation on entend l'obtention d'informations représentatives des interactions des composés d'intérêt contenus dans l'échantillon gazeux avec les récepteurs du ou des sites sensibles du nez électronique. Les interactions en question ici sont des évènements d'adsorption et/ou de désorption des composés d'intérêt avec les récepteurs. Ces informations forment ainsi un motif d'interaction, autrement dit une « signature » des composés d'intérêt, ce motif pouvant être représenté par exemple sous forme d'histogramme ou d'un diagramme en radar. Plus précisément, dans le cas où le nez électronique comporte N sites sensibles distincts, le motif d'interaction est formé par les N informations représentatives scalaires ou vectorielles, celles-ci étant issues du signal de mesure associé au site sensible considéré.

D'une manière générale, les composés d'intérêt (*analytes,* en anglais) sont des éléments destinés à être caractérisés par le nez électronique, et contenus dans un échantillon gazeux. Ils peuvent être, à titre illustratif, des bactéries, virus, protéines, lipides, molécules organiques volatiles, composés inorganiques, entre autres. Par ailleurs, les récepteurs (*ligants,* en anglais) sont des éléments fixés aux sites sensibles et qui présentent une capacité d'interaction avec les composés d'intérêt, bien que les affinités chimique et/ou physique entre les composés sensibles et les récepteurs ne soient pas nécessairement connues. Les récepteurs des différents sites sensibles présentent de préférence des propriétés physico-chimiques différentes, qui impactent leur capacité à interagir avec les composés d'intérêt. Il peut s'agir, à titre d'exemples, des acides aminés, des peptides, des nucléotides, des polypeptides, des protéines, des polymères organiques, entre autres.

La figure 1C, décrite partiellement précédemment, illustre un exemple de sensorgrammes $Su_k(t)$ associés à des sites sensibles $23_k$ d'un nez électronique 1 à imagerie SPR, dans le cadre d'un procédé de caractérisation dans lequel les sensorgrammes présentent chacun un profil dit conventionnel, c'est-à-dire qu'ils mettent en évidence la présence d'un régime d'équilibre (i.e. stationnaire) d'interactions entre les composés d'intérêt et les récepteurs. Dans cet exemple, l'humidité relative φ ne varie sensiblement pas entre la phase initiale Pa et la phase de caractérisation Pb.

Un sensorgramme $Su_k(t)$ correspond à l'évolution temporelle d'un paramètre de caractérisation représentatif des interactions entre les composés d'intérêt et les récepteurs d'un site sensible considéré $23_k$. Il est déterminé à partir de l'intensité du signal de mesure $S_k(t)$

provenant du site sensible $23_k$ en réponse à l'émission d'un signal d'excitation. Dans cet exemple, le paramètre de caractérisation est la variation $\Delta\%R_k(t)$ de la réflectivité $\%R_k(t)$ associée au site sensible $23_k$ par rapport à une valeur de référence *(baseline)*, mais il peut s'agir, dans une autre configuration du nez électronique, de la variation du coefficient de transmission. La variation de la réflectivité $\Delta\%R_k(t)$ est ici corrélée à la modification de l'indice de réfraction du site sensible $23_k$ considéré, lequel dépend des interactions d'adsorption et de désorption des composés d'intérêt avec les récepteurs du site sensible $23_k$.

De manière connue, un sensorgramme $Su_k(t)$ à profil conventionnel présente une phase initiale Pa, une phase de caractérisation des composés d'intérêt Pb, puis une phase de dissociation Pc. La valeur en ordonnée du sensorgramme $Su_k(t)$ est notamment proportionnelle au nombre de récepteurs du site sensible $23_k$ considéré.

La phase initiale Pa correspond à l'introduction dans la chambre de mesure 21, à partir de l'instant $t_0$ et jusqu'à l'instant $t_c$, d'un gaz de référence (ne contenant pas les composés d'intérêt). Les signaux de mesure $S_k(t)$, autrement dit l'évolution temporelle de la réflectivité $\%R(t)$ déterminée pour chaque site sensible $23_k$ entre $t_0 \leq t < t_c$, caractérisent l'environnement dans la chambre de mesure pour chacun des sites sensibles $23_k$. On en déduit ensuite une valeur de référence $S_k^b$ *(baseline)* généralement différente d'un site sensible $23_k$ à l'autre, qui est ensuite soustraite au signal de mesure $S_k(t)$ pour obtenir le signal utile $Su_k(t)$ illustré sur la figure 1C. Ainsi, les sensorgrammes illustrent les signaux utiles $Su_k(t)$, lesquels présentent donc, lors de la phase initiale Pa, une même valeur initiale proche de zéro pour l'ensemble des sites sensibles $23_k$.

La phase d'injection Pb correspond à l'introduction dans la chambre de mesure 21, à partir de l'instant $t_c$ jusqu'à l'instant $t_d$, d'un échantillon gazeux (gaz porteur et composés d'intérêt, et éventuellement un diluant inodore en phase gazeuse). Cette phase comporte un régime transitoire d'assimilation Pb.1 suivi d'un régime stationnaire d'équilibre Pb.2. Dans cet exemple, l'humidité relative $\varphi$ est constante au cours des différentes phases Pa, Pb et Pc.

Le régime transitoire d'assimilation Pb.1 correspond à l'augmentation progressive, de forme exponentielle (loi approchée de Langmuir), des interactions entre les composés d'intérêt et les récepteurs, à mesure que les composés d'intérêt sont injectés dans la chambre de mesure 21. La croissance exponentielle des sensorgrammes dans le régime d'assimilation est due au fait qu'il y a alors bien plus d'évènements d'adsorption que d'évènements de désorption.

Notons à cet égard que l'interaction entre un composé d'intérêt A (*analyte* en anglais) et un récepteur L (*ligand*, en anglais) est un phénomène réversible caractérisé par une constante d'adsorption $k_a$ (en mol$^{-1}$.s$^{-1}$) du composé d'intérêt A au récepteur L pour former un composé d'intérêt/récepteur LA (pour *ligand-analyte*, en anglais), et par une constante de désorption $k_b$ (en s$^{-1}$) correspondant à la dissociation du composé LA. Le ratio $k_d/k_a$ forme la constante de dissociation d'équilibre $k_D$ (en mol) qui donne la valeur de la concentration $c_A$ de composés d'intérêt A permettant de saturer 50% des récepteurs L.

Le régime stationnaire d'équilibre Pb.2 est atteint lorsque la concentration $c_{LA}(t)$ en composés LA est stationnaire $dc_{LA}/dt = 0$, c'est-à-dire lorsque le produit de la constante $k_a$ avec les concentrations de composés d'intérêt $c_A(t)$ et de récepteurs $c_L(t)$ (nombre d'évènements d'adsorption) est égal au produit de la constante $k_d$ avec la concentration $c_{LA}(t)$ de composés LA (nombre d'évènements de désorption), autrement dit lorsque l'équation d'évolution suivante est vérifiée $dc_{LA}/dt = k_a \times c_A \times c_L - k_d \times c_{LA} = 0$. La valeur maximale stationnaire du signal de mesure est proportionnelle à la concentration $c_A(t)$ de composés d'intérêt A. La saturation des récepteurs L du site sensible peut être atteinte lorsque la concentration $c_A$ en composés d'intérêt A est suffisante.

La phase de dissociation Pc correspond à une étape d'évacuation des composés d'intérêt présents dans la chambre de mesure, à partir de l'instant $t_d$, de sorte que la concentration en composés LA diminue, habituellement de manière exponentielle. Il peut s'agir d'introduire à nouveau le même gaz de référence dans la chambre de mesure.

Or, il apparaît que la variation d'humidité relative au sein de la chambre de mesure 21 au cours de la phase de caractérisation forme un biais de mesure qui dégrade la qualité de la caractérisation. Ce biais de mesure est un biais lié à une différence non nulle de l'humidité relative au sein de la chambre de mesure 21 entre la phase initiale Pa et la phase de caractérisation Pb. Il s'agit d'un biais de mesure puisqu'il est issu d'une variation temporelle d'un paramètre (ici l'humidité relative) qui caractérise l'environnement à l'intérieur de la chambre de mesure et qui devrait théoriquement rester stationnaire au cours du temps. Il est appelé ici « biais de mesure » plutôt que « bruit de mesure » puisqu'il s'agit d'une variation du signal de mesure à caractère déterministe et non pas aléatoire. Cette variation d'humidité peut provient d'une différence de teneur en eau entre le gaz de référence injecté lors de la phase initiale Pa, souvent l'air ambiant, et le gaz odorant, souvent l'air ambiant mélangé à un effluve (échantillon gazeux injecté lors de la période d'injection Pb), cet effluve pouvant être caractérisé par une ou plusieurs molécules hydrophiles ou hydrophobes, ou bien, pouvant provenir d'une matière source dont les émanations contiennent plus d'eau que l'air ambiant (exemple d'une cuisson d'un aliment).

Autrement dit, l'humidité relative peut présenter une première valeur $\varphi 1$ sensiblement constante au cours de la phase initiale Pa, et une deuxième valeur $\varphi 2$ sensiblement constante mais différente de la valeur $\varphi 1$ au cours de la phase de caractérisation Pb. On définit ici la différence d'humidité relative $\Delta\varphi$ comme étant égale à $\varphi 2 - \varphi 1$. Par humidité relative $\varphi$, on entend la teneur en vapeur d'eau du gaz présent dans la chambre de mesure, et ici du gaz porteur. Il s'agit du rapport entre la pression partielle de la vapeur d'eau contenue dans le gaz présent et la pression de vapeur saturante à la même température.

Ce biais de mesure est présent notamment lorsque l'échantillon gazeux présente une humidité relative $\varphi2$ différente, par exemple inférieure, à l'humidité relative $\varphi1$ du gaz de référence introduit lors de la phase initiale Pa. Ainsi, lors de la phase initiale Pa, le gaz de référence peut être de l'air humide d'humidité relative $\varphi1$ issu de l'environnement du nez électronique 1. Et lors de la phase de caractérisation Pb, l'échantillon gazeux est formé d'air humide issu par exemple de l'environnement du nez électronique 1, ainsi que des composés d'intérêt issu d'un réservoir 12. Cependant, l'humidité relative $\varphi2$ de l'échantillon gazeux peut être différente de $\varphi1$. En effet, l'humidité relative de l'air humide provenant de l'environnement peut avoir changé. Une autre possibilité expliquant la variation d'humidité relative passant de $\varphi1$ à $\varphi2$ peut provenir de l'humidité relative du gaz présent dans l'espace de tête (*headspace,* en anglais) du réservoir 12 contenant les composés cibles. En effet, pour former l'échantillon gazeux, de l'air humide à $\varphi1$ provenant d'une source 11 de gaz porteur est introduit dans le réservoir 12 et est mélangé au gaz présent (diluant en phase gazeuse et composés d'intérêt). Or, le diluant en phase liquide peut être hydrophile, de sorte qu'il peut alors conduire à une diminution de l'humidité relative $\varphi$ de l'air humide introduit dans l'espace de tête du réservoir 12. En conséquence, l'échantillon gazeux va présenter une humidité relative $\varphi2$ inférieure à $\varphi1$ et éventuellement non constante.

Notons qu'un équilibre thermodynamique peut progressivement s'établir dans l'espace de tête du réservoir 12, de sorte que le diluant hydrophile en phase liquide ne va plus induire une diminution continue de l'humidité relative de l'air humide introduit dans l'espace de tête. Aussi, dans ce cas de figure, l'humidité relative de l'échantillon gazeux dans la chambre de mesure 21 va progressivement tendre vers une valeur sensiblement égale à $\varphi1$, de sorte que le biais de mesure, associé à la différence $\Delta\varphi$ d'humidité relative entre les phases Pa et Pb, va diminuer dans le temps. Quoi qu'il en soit, tant que l'équilibre thermodynamique n'est pas atteint, les différentes caractérisations successives se traduiront par des signatures qui ne seront alors pas identiques au cours du temps (dérive temporelle des signatures).

Cette problématique de biais de mesure lié à $\Delta\varphi$ est particulièrement importante lorsque le procédé de caractérisation est effectué à partir de signaux utiles $Su_k(t)$, c'est-à-dire qu'il comporte une étape de soustraction de la valeur de référence $S_k^b$ (*baseline*) au signal de mesure $S_k(t)$ correspondant. En effet, le but de cette étape consiste à écarter de la caractérisation des composés d'intérêt l'effet associé à leur environnement et notamment l'effet du gaz porteur. Or, il apparaît que cette valeur de référence $S_k^b$ est représentative du gaz porteur lors de la phase initiale Pa, mais n'est plus nécessairement représentative du gaz porteur lors de la phase de caractérisation Pb puisque les propriétés physiques de ce gaz porteur dans la chambre de mesure ont pu changer (variation de l'humidité relative).

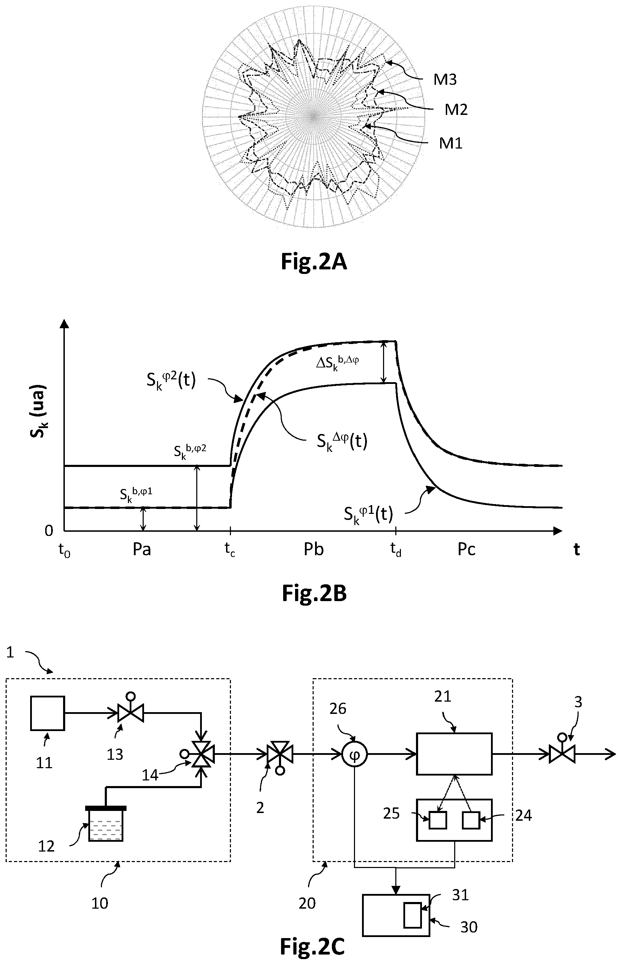

La figure 2A illustre trois motifs d'interaction, ou signatures, traduisant la caractérisation de différents échantillons gazeux, cette caractérisation étant effectuée par un procédé de caractérisation selon un exemple de l'art antérieur. Ces motifs d'interaction M1, M2 et M3 sont ici des représentations sous la forme d'un diagramme en radar des valeurs d'équilibres (stationnaires) déterminées à partir des sensorgrammes $Su_k(t)$ dans le régime stationnaire d'équilibre Pb.2. Ils permettent de mettre en évidence l'effet de la différence d'humidité relative $\Delta\varphi$ sur la caractérisation des composés d'intérêt. Pour obtenir ces motifs d'interaction M1, M2, M3, le gaz porteur est identique pour les trois essais et correspond à de l'air humide présentant une humidité relative initiale $\varphi1$ de 12% environ.

Une première signature M1 correspond à un échantillon gazeux formé d'air humide avec une humidité relative $\varphi2$ égale à 50% environ et dont les composés d'intérêt sont des molécules de butanol. La mise en oeuvre du procédé de caractérisation présente ainsi une variation relativement importante de l'humidité relative dans la chambre de mesure 21, qui passe ici de $\varphi1$ égale à 12% environ lors de la phase initiale Pa, à $\varphi2$ égale à 50% environ lors de la phase de caractérisation. Aussi, la valeur de référence $S_k^b$ est déterminée pour le gaz de référence (air humide à $\varphi1$ de 12%), et la valeur d'équilibre est déterminée pour l'échantillon gazeux (air humide à $\varphi2$ de 50% avec les composés d'intérêt) après avoir soustrait la valeur de référence $S_k^b$. Cette différence d'humidité relative $\Delta\varphi$ forme ainsi un biais de mesure dont il importe de limiter l'effet pour que le motif d'interaction M1 soit effectivement représentatif uniquement des molécules de butanol.

Une deuxième signature M2 correspond à un deuxième échantillon gazeux formé d'air humide avec une humidité relative $\varphi2$ sensiblement égale à $\varphi1$ (12%), et dont les composés d'intérêt sont également des molécules de butanol. La mise en oeuvre du procédé de caractérisation permet, en soustrayant la valeur de référence $S_k^b$ associée au gaz de référence (air humide à $\varphi1$), et dans la mesure où la variation d'humidité relative $\Delta\varphi$ est nulle, d'écarter l'effet de l'environnement gazeux et ainsi caractériser les interactions seules des composés d'intérêt avec les récepteurs. Aussi, la signature M2 est représentative des seuls composés d'intérêt puisqu'il n'y a pas de biais de mesure associé à une variation d'humidité relative $\Delta\varphi$. On remarque que la signature M1 ne se superpose pas à la signature M2, traduisant bien la présence du biais de mesure associé à $\Delta\varphi$ dans le cas de M1. Il importe donc d'être en mesure de corriger la signature M1 pour tendre vers la signature M2, laquelle est seule représentative des composés d'intérêt, quand bien même il y a une différence d'humidité relative $\Delta\varphi$

dans la chambre de mesure entre la phase initiale Pa et la phase de caractérisation Pb.

La troisième signature M3 correspond à un gaz de référence formé seulement d'air humide avec une humidité relative $\varphi2$ égale à 50% environ (pas de composés cibles). Ici, on mesure l'impact seul de la variation de l'humidité relative $\Delta\varphi$ sur la caractérisation de l'air humide par le nez électronique 1, en l'absence de composés d'intérêt. Il apparaît que l'augmentation d'humidité relative $\Delta\varphi$ entre la phase initiale Pa et la phase de caractérisation Pb se traduit par une augmentation de la variation de réflectivité $\Delta\%R_k$ des sites sensibles $23_k$. On remarque que la signature M1 (échantillon gazeux formé d'air humide avec $\Delta\varphi$ non nulle et de composés d'intérêt) est située entre la signature M2 (échantillon gazeux formé d'air humide avec $\Delta\varphi$ nulle et de composés d'intérêt) et la signature M3 (air humide avec $\Delta\varphi$ non nulle sans composés d'intérêt), montrant bien l'effet du biais de mesure associé à la différence d'humidité relative $\Delta\varphi$ non nulle sur la signature des composés d'intérêt. Il importe donc d'être en mesure de limiter voire écarter ce biais de mesure pour améliorer la qualité de la caractérisation des composés d'intérêt.

La figure 2B illustre des exemples de signaux de mesure $S_k(t)$ pour différents échantillons gazeux, mettant ainsi également en évidence l'impact du biais de mesure associé à la variation d'humidité relative $\Delta\varphi$ sur la caractérisation des composés d'intérêt. Dans ces exemples, le gaz de référence (injecté lors de la phase Pa) et le gaz porteur de l'échantillon gazeux (injecté lors de la phase Pb) sont de l'air humide.

Le signal de mesure $S_k^{\varphi1}(t)$ correspond au cas où l'humidité relative dans la chambre de mesure 21 reste constante et égale à $\varphi1$ pendant la phase initiale Pa et pendant la phase de caractérisation Pb. La variation d'humidité relative $\Delta\varphi$ est alors nulle (pas de biais de mesure associé). Il présente une valeur de référence $S_k^{b,\varphi1}$ non nulle (*baseline*), qui correspond à la réponse du nez électronique 1 lorsque le gaz de référence (air humide à $\varphi1$ sans composés d'intérêt) est dans la chambre de mesure 21 lors de la phase initiale Pa.

Le signal de mesure $S_k^{\varphi2}(t)$ correspond au cas où l'humidité relative dans la chambre de mesure 21 reste constante et égale à $\varphi2$ pendant la phase initiale Pa et pendant la phase de caractérisation Pb. La variation d'humidité relative $\Delta\varphi$ est alors nulle (pas de biais de mesure associé). L'humidité relative $\varphi2$ est ici supérieure à $\varphi1$. Il présente une valeur de référence $S_k^{b,\varphi2}$ *(baseline),* non nulle et différente de $S_k^{b,\varphi1}$, qui correspond à la réponse du nez électronique 1 lorsque le gaz de référence (air humide à $\varphi2$ sans composés d'intérêt) est dans la chambre de mesure 21 lors de la phase initiale Pa.

Le signal de mesure $S_k^{\Delta\varphi}(t)$ correspond au cas où l'humidité relative dans la chambre de mesure 21 n'est pas constante, et passe de la valeur $\varphi1$ lors de la phase initiale Pa à la valeur $\varphi2$ de la phase de caractérisation Pb. La variation d'humidité relative $\Delta\varphi$ est alors non nulle, et ici positive. Il présente la même valeur de référence $S_k^{b,\varphi1}$ que pour le signal de mesure $S_k^{\varphi1}(t)$, dans la mesure où le gaz de référence présente l'humidité relative $\varphi1$ lors de la phase initiale Pa. En revanche, il présente la même valeur d'équilibre que le signal de mesure $S_k^{\varphi2}(t)$ dans la mesure où l'échantillon gazeux présente l'humidité relative $\varphi2$ lors de la phase de caractérisation Pb. Aussi, le signal de mesure $S_k^{\Delta\varphi}(t)$ passe progressivement du signal de mesure $S_k^{\varphi1}(t)$ lors de la phase initiale Pa au signal de mesure $S_k^{\varphi2}(t)$ lors de la phase de caractérisation Pb. Le biais de mesure présente alors une intensité de l'ordre de $\Delta S_k^{b,\Delta\varphi}$ correspondant à la différence entre $S_k^{b,\varphi2}$ et $S_k^{b,\varphi1}$. Il s'agit alors, pour caractériser les composés d'intérêt seuls, d'être en mesure de réduire voire supprimer le biais de mesure $\Delta S_k^{b,\Delta\varphi}$ dans le signal de mesure $S_k^{\Delta\varphi}(t)$.

La figure 2C est une vue schématique et partielle d'un nez électronique 1 selon un mode de réalisation dans lequel il est adapté à corriger le biais de mesure $\Delta S_k^{b,\Delta\varphi}$ lié à la variation d'humidité relative $\Delta\varphi$ dans la chambre de mesure 21 au cours de la phase de caractérisation.

Le nez électronique 1 est ici un système optoélectronique permettant de caractériser des composés d'intérêt, par exemple des molécules odorantes, des composés organiques volatils ou autres, contenus dans un échantillon gazeux introduit dans une chambre de mesure 21. Le nez électronique 1 représenté sur ces figures repose ici sur la technologie SPR et présente dans cet exemple les caractéristiques de la configuration dite de Kretschmann, connue de l'homme du métier, sans que l'invention ne soit toutefois limitée à cette configuration. Toutefois, comme indiqué précédemment, d'autres techniques de mesure peuvent être utilisées, comme les mesures de la fréquence de résonance d'un microrésonateur de type MEMS ou NEMS fonctionnalisé de sorte qu'il présente au moins un site sensible muni de récepteurs.

Le nez électronique 1 comporte une pluralité de sites sensibles $23_k$ distincts les uns des autres et situés dans une chambre de mesure 21 destinée à recevoir l'échantillon gazeux à analyser, ces sites sensibles étant formés chacun des récepteurs aptes à interagir avec les composés d'intérêt à étudier (cf. fig.1B). Les sites sensibles $23_k$ sont distincts les uns des autres, dans le sens où ils comportent des récepteurs différents, en termes d'affinité chimique ou physique vis-à-vis des composés d'intérêt à analyser, et sont donc destinés à fournir une information d'interaction différente d'un site sensible $23_k$ à l'autre. Les sites sensibles $23_k$ sont des zones distinctes d'un support de mesure 22, et peuvent être accolés ou espacés les unes des autres. Le nez électronique 1 peut en outre comporter plusieurs sites sensibles $23_k$ identiques, dans le but par exemple de détecter une éventuelle dérive de mesure et/ou de permettre l'identification d'un site sensible défectueux.

Le nez électronique 1 comporte un dispositif de mesure 20, ici de type imagerie SPR, permettant de quantifier les interactions des composés d'intérêt avec les récepteurs, pour chaque site sensible $23_k$, ici en me-

surant en temps réel l'intensité d'un signal optique de mesure provenant du site sensible $23_k$ considéré, ce signal optique étant ici une partie réfléchie d'un signal optique d'excitation émis par une source lumineuse 24. L'intensité du signal optique de mesure détecté par le capteur optique 25 est directement corrélée notamment aux interactions d'adsorption/désorption des composés d'intérêt avec les récepteurs. Dans le cas des techniques de mesure de la fréquence de résonance d'un microrésonateur NEMS ou MEMS, le signal de mesure peut être un signal électrique représentatif de la vibration d'une micropoutre ou équivalent.

Dans le cadre d'une mesure par imagerie SPR, le dispositif de mesure 20 est adapté à acquérir en temps réel le signal optique de mesure provenant de l'ensemble des sites sensibles $23_k$. Ainsi, les signaux optiques de mesure provenant des sites sensibles $23_k$ en réponse au signal optique d'excitation sont détectés ensemble et en temps réel, sous la forme d'une image acquise par le même capteur optique 25.

Ainsi, le dispositif de mesure 20 comporte une source lumineuse 24 adaptée à transmettre un signal optique dit d'excitation en direction des sites sensibles $23_k$, et à générer des plasmons de surface au niveau du support de mesure 22. La source lumineuse 24 peut être formée d'une diode électroluminescente, dont le spectre d'émission présente un pic d'émission centré sur une longueur d'onde centrale $\lambda_c$. Différents éléments optiques (lentilles, polariseur...) peuvent être disposés entre la source lumineuse 24 et le support de mesure 22.

Le dispositif de mesure 20 comporte en outre un capteur optique 25, et ici un capteur d'image, c'est-à-dire un capteur optique matriciel adapté à collecter ou détecter une image du signal optique provenant des sites sensibles en réponse au signal optique d'excitation. Le capteur d'image 25 est un photodétecteur matriciel, par exemple un capteur CMOS ou CCD. Il comporte donc une matrice de pixels dont la résolution spatiale est telle que, de préférence, plusieurs pixels acquièrent le signal optique de mesure provenant d'un même site sensible $23_k$.

L'unité de traitement 30 permet la mise en oeuvre des opérations de traitement décrites par la suite dans le cadre du procédé de caractérisation. Elle peut comporter au moins un microprocesseur et au moins une mémoire 31. Elle est connectée au dispositif de mesure 20, et plus précisément au capteur d'image 25. Elle comporte un processeur programmable apte à exécuter des instructions enregistrées sur un support d'enregistrement d'informations. Elle comporte en outre au moins une mémoire 31 contenant les instructions nécessaires à la mise en oeuvre du procédé de caractérisation. La mémoire 31 est également adaptée à stocker les informations calculées à chaque instant de mesure.

Comme décrit plus loin, l'unité de traitement 30 est notamment adaptée à stocker et à traiter une pluralité d'images dites élémentaires acquises à une fréquence d'échantillonnage $f_e$ donnée, sur une durée de mesure $\Delta t$, afin de déterminer un signal de mesure $S_k(t_i)$, à l'instant courant $t_i$, associé au site sensible $23_k$. De préférence, le signal de mesure $S_k(t_i)$ correspond, à un instant de mesure $t_i$, à la moyenne de l'intensité du signal optique réfléchi et détecté par le capteur d'image 25 sur les pixels associés au site sensible $23_k$. La moyenne de l'intensité optique détectée sur les pixels peut être effectuée pour une ou plusieurs images du site sensible $23_k$, comme décrit en détail plus loin.

Le dispositif fluidique d'alimentation 10 est adapté à alimenter la chambre de mesure 21 en un gaz de référence seul (i.e. sans les composés d'intérêt) pendant la phase initiale Pa, et en un échantillon gazeux formé d'un gaz porteur et des composés d'intérêt pendant la phase de caractérisation Pb. L'échantillon gazeux diffère du gaz de référence essentiellement en ce qu'il comporte les composés d'intérêt. Un ou plusieurs gaz additionnels peuvent être présents, mais sont inodores de sorte qu'ils n'induisent sensiblement pas de réponse de la part du nez électronique 1. Un exemple de gaz additionnel présent dans l'échantillon gazeux peut être le diluant en phase vapeur. Comme décrit en référence à la fig.1C, les composés d'intérêt peuvent être stockés dans un diluant liquide contenu dans un réservoir 12. La phase vapeur du diluant et les composés d'intérêt sont ajoutés au gaz porteur (par ex. de l'air humide) pour former l'échantillon gazeux. Le gaz de référence et l'échantillon gazeux diffèrent l'un de l'autre ici également par leur valeur d'humidité relative.

Pour cela, le dispositif fluidique d'alimentation 10 comporte une source 11 de gaz de référence, et un réservoir 12 de composés d'intérêt. Ici, le réservoir 12 contient un diluant liquide dans lequel se situent les composés d'intérêt. Le dispositif fluidique d'alimentation 10 comporte également une vanne 13 située en aval de la source 11, et une vanne 14 qui relie la source 11 et le réservoir 12 à un conduit fluidique allant jusqu'à la chambre de mesure 21. Il permet ainsi d'alimenter la chambre de mesure 21 en le gaz de référence (par ex. air humide à l'humidité relative $\varphi 1$) lors de la phase initiale Pa et de la phase de dissociation Pc, et en l'échantillon gazeux (par ex. air humide à l'humidité relative $\varphi 2$, composés d'intérêt, et éventuellement diluant en phase vapeur) lors de la phase de caractérisation Pb. Il peut être adapté à s'assurer que la concentration des composés d'intérêt dans la chambre de mesure 21 reste constante au cours du temps. Par ailleurs, le nez électronique 1 comporte en outre un capteur d'humidité 26 apte à mesurer l'humidité relative dans la chambre de mesure 21. Ce capteur 26 peut mesurer directement l'humidité relative du gaz, voire peut mesurer tout autre paramètre physique à partir duquel on peut en déduire l'humidité relative du gaz en question. Le capteur d'humidité 26 peut être disposé dans la chambre de mesure 21, ou en amont (comme illustré) ou en aval de celle-ci. Il est connecté à l'unité de traitement 30, qui peut en outre être adaptée à calculer une différence d'humidité relative entre la phase initiale Pa et la phase de caractérisation Pb.

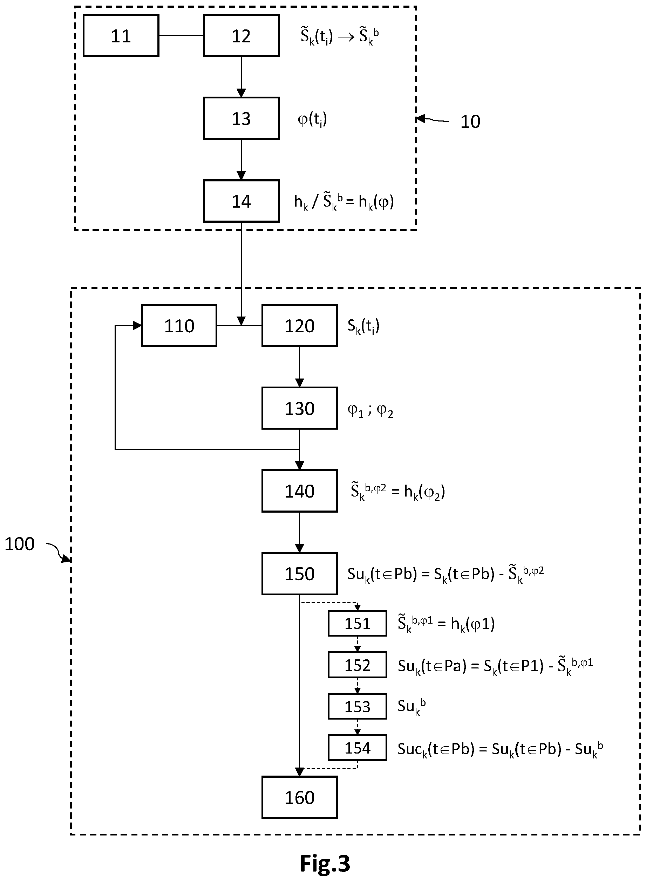

La figure 3 illustre un organigramme d'un procédé de caractérisation de composés d'intérêt selon un premier mode de réalisation, dans lequel le biais de mesure $\Delta S_k^{b,\Delta\varphi}$ lié à une différence d'humidité relative $\Delta\varphi$ non nulle est réduit voire écarté, la différence d'humidité relative $\Delta\varphi$ dans la chambre de mesure 21 étant définie entre une valeur $\varphi 1$ lors de la phase initiale Pa et une valeur $\varphi 2$ différente de $\varphi 1$ lors de la phase de caractérisation Pb. Dans ce mode de réalisation, le signal utile $Su_k(t)$ est corrigé à partir d'une estimation d'une valeur de référence $\tilde{S}_k^{b,\varphi 2}$ associée au gaz de référence pour l'humidité relative $\varphi 2$, cette estimation étant obtenue à partir d'une fonction de correction $h_k$.

Lors d'une phase préalable 10 de calibration, on détermine une fonction de correction $h_k$ associée à chaque site sensible $23_k$. Cette fonction de correction $h_k$ exprime une variation d'un paramètre représentatif du signal de mesure associé au gaz de référence introduit lors de la phase initiale Pa en fonction de l'humidité relative $\varphi$. Plus précisément, le paramètre représentatif est ici une valeur de référence du signal de mesure lorsque le gaz de référence est présent dans la chambre de mesure 21. On note ici $\tilde{S}_k^b$ la valeur de référence estimée *(baseline)* du signal de mesure $\tilde{S}_k(t)$ déterminée lors de la phase de calibration. Plus précisément, on place le signe tilde sur la lettre S lorsque le signal de mesure et sa valeur de référence sont associés à la fonction de correction. La fonction de correction est une fonction continue qui peut être polynomiale, logarithmique ou autre. Elle est paramétrisée lors de la phase 10 de calibration, comme détaillé plus loin.

Lors d'une première étape 110, on effectue l'étape d'injection fluidique dans la chambre de mesure 21 du nez électronique 1. Cette étape comporte une première phase initiale Pa d'injection du gaz de référence (ici le gaz porteur sans les composés d'intérêt), une deuxième phase de caractérisation Pb au cours de laquelle est injecté l'échantillon gazeux (gaz porteur avec les composés d'intérêt), puis une troisième phase de dissociation Pc. Le gaz de référence et l'échantillon gazeux présentent des humidités relatives différentes, notées $\varphi 1$ pour le gaz de référence et $\varphi 2$ pour l'échantillon gazeux.

Lors d'une étape 120, on détermine, pour chaque site sensible $23_k$ allant de 1 à N, à l'instant courant $t_i$, un signal de mesure $S_k(t_i)$ représentatif de la réflectivité $\%R_k(t_i)$ du site sensible $23_k$ considéré, et donc représentatif en outre de la réponse du nez électronique 1 en présence du gaz de référence puis de l'échantillon gazeux introduits dans la chambre de mesure 21.

Pour cela, on acquiert, au cours de l'étape d'injection 110, une pluralité d'images dites élémentaires $le_m$ des N sites sensibles $23_k$. Plus précisément, on éclaire les sites sensibles $23_k$ par un signal optique d'excitation apte à y générer des plasmons de surface, et on détecte la partie réfléchie du signal optique d'excitation. Le capteur d'image 25 est connecté à l'unité de traitement 30, qui stocke les images acquises.

Le capteur d'image 25 acquiert, sur une durée $\Delta t$ séparant deux instants de mesure successifs $t_{i-1}$ et $t_i$, une pluralité d'images dites élémentaires $le_m$ de la matrice des N sites sensibles distincts, m étant le rang d'acquisition de l'image élémentaire le, à une fréquence d'échantillonnage $f_e$. La fréquence d'échantillonnage $f_e$ peut être de 10 images par seconde, et la durée $\Delta t$ d'acquisition peut être de quelques secondes, par exemple 4s.

Pour chaque image élémentaire $le_m$, l'unité de traitement détermine une valeur d'intensité optique élémentaire $(I_k)_m$ en faisant la moyenne de l'intensité optique $(I_k(i,j))_m$ acquise par chaque pixel i,j associé à un même site sensible $23_k$, et en calcule une valeur moyenne $(\bar{I}_k)_{\Delta t}$ sur la durée $\Delta t$ d'acquisition. Cette valeur moyenne $(\bar{I}_k)_{\Delta t}$ correspond alors au signal de mesure $S_k(t_i)$, à l'instant courant $t_i$, associé au site sensible $23_k$.

Cette étape 120 d'acquisition et de détermination des signaux de mesure $S_k(t_i)$ est effectuée au cours de l'étape d'injection fluidique 110, et réitérée pour plusieurs instants de mesure $t_i$ successifs. A chaque itération i est associé un instant de mesure $t_i$ également appelé instant courant.

Lors d'une étape 130, on mesure l'humidité relative dans la chambre de mesure 21 lors des phases Pa et Pb. Pour cela, le capteur d'humidité 26 mesure l'humidité relative $\varphi$ lors des phases Pa et Pb et transmet les valeurs mesurées à l'unité de traitement 30. L'humidité relative $\varphi 2$ (phase Pb) est ici différence de la valeur $\varphi 1$ (phase Pa). Les valeurs d'humidité relative $\varphi 1$ et $\varphi 2$ peuvent chacune être une valeur moyenne de l'humidité relative au cours de cette phase considérée ou au cours d'une durée déterminée. L'humidité relative $\varphi 1$ est de préférence une valeur moyenne calculée sur une durée qui précède directement l'instant $t_c$ et donc la phase de caractérisation Pb. L'humidité relative $\varphi 2$ est de préférence une valeur moyenne calculée sur une durée située lors du régime stationnaire Pb.2, par exemple pendant une durée qui précède directement l'instant $t_d$ et donc la phase de dissociation Pc.

Lors d'une étape 140, on détermine une valeur de référence $\tilde{S}_k^{b,\varphi 2}$ représentative du signal de mesure associé au gaz de référence pour une humidité relative $\varphi 2$. Cette valeur de référence $\tilde{S}_k^{b,\varphi 2}$ est calculée à partir de la fonction de correction $h_k$ et à partir de la valeur mesurée $\varphi 2$. Autrement dit : $\tilde{S}_k^{b,\varphi 2} = h_k(\varphi 2)$.

Lors d'une étape 150, on corrige le signal de mesure $S_k(t_i)$ associé à l'échantillon gazeux, c'est-à-dire pour $t_i$ appartenant à la phase Pb (i.e. $t_i \in Pb$), par sous-

traction de la valeur de référence $\tilde{S}_k^{b,\varphi 2}$ déterminée. On obtient ainsi un signal utile $Su_k(t_i \in Pb)$. Ainsi, dans le cadre de ce mode de réalisation, on calcule le signal utile associé à l'échantillon gazeux, donc comprenant les composés d'intérêt mais ayant subi une variation d'humidité relative, par correction de son signal de mesure $S_k(t_i \in Pb)$ lors de la phase Pb par la valeur de référence $\tilde{S}_k^{b,\varphi 2}$ estimée par la fonction de correction $h_k$ et non pas en lui soustrayant sa propre valeur de référence $S_k^b$. En effet, cette valeur $S_k^b$ est associée à l'humidité relative $\varphi 1$ du gaz de référence pendant la phase Pa, alors que le signal de mesure de l'échantillon gazeux est impacté par le biais de mesure lié à la différence $\Delta\varphi$. Aussi, soustraire au signal de mesure $S_k(t_i \in Pb)$ la valeur de référence $S_k^b$ ne permet pas de tenir compte du biais de mesure $\Delta S_k^{b,\Delta\varphi}$. Alors que lui soustraire la valeur de référence $\tilde{S}_k^{b,\varphi 2}$ estimée à l'aide de la fonction de correction $h_k$ permet de tenir compte de la différence de l'humidité relative $\Delta\varphi$.

Lors d'une étape 160, on caractérise les composés d'intérêt à partir des signaux utiles corrigés $Su_k(t_i \in Pb)$. On extrait de ces signaux une valeur d'équilibre, i.e. stationnaire, pour chacun des sites sensibles $23_k$, pour ainsi fournir une représentation sous forme d'un histogramme, d'un diagramme en radar, ou autre, formant la signature des composés cibles.

Aussi, le procédé de caractérisation selon ce mode de réalisation permet d'améliorer la qualité de la caractérisation des composés d'intérêt, en limitant voire écartant le biais de mesure $\Delta S_k^{b,\Delta\varphi}$ lié à une variation non nulle de l'humidité relative $\Delta\varphi$ entre les phases Pa et Pb. Le signal utile $Su_k(t_i \in Pb)$ permettant de caractériser les composés d'intérêt est donc calculé en corrigeant le signal de mesure $S_k(t_i \in Pb)$ associé à l'échantillon gazeux par une valeur de référence $\tilde{S}_k^{b,\varphi 2}$ associée au gaz de référence et à l'humidité relative $\varphi 2$. Cela revient à estimer la valeur de référence $\tilde{S}_k^{b,\varphi 2}$ qu'aurait le gaz de référence pour l'humidité relative $\varphi 2$, puis à soustraire cette valeur au signal de mesure $S_k(t_i)$ détecté à l'étape 120. La caractérisation des composés d'intérêt est alors rendue plus juste et précise, dans la mesure où elle porte sur les composés d'intérêt seul et non pas ou peu sur le gaz qui a connu une variation de son humidité relative dans la chambre de mesure 21.

Les étapes 151 à 154 peuvent être effectuées de manière avantageuse. Elles permettent d'améliorer encore la qualité de la caractérisation des composés d'intérêt, dans le cas où le nez électronique 1 présente une dérive de capteur, c'est-à-dire une variation du signal de mesure émis par le nez électronique 1 alors que les composés d'intérêt et les conditions opératoires sont les mêmes. Cette dérive de capteur peut avoir lieu entre la phase de calibration 10 et la phase de caractérisation 100.

Lors de l'étape 151, on détermine la valeur de référence $\tilde{S}_k^{b,\varphi 1}$ représentative du signal de mesure associé au gaz de référence pour une humidité relative $\varphi 1$. Cette valeur de référence $\tilde{S}_k^{b,\varphi 1}$ est calculée à partir de la fonction de correction $h_k$ et à partir de la valeur mesurée $\varphi 1$. Autrement dit, $\tilde{S}_k^{b,\varphi 1} = h_k(\varphi 1)$.

Lors de l'étape 152, on corrige le signal de mesure $S_k(t_i)$ associé au gaz de référence, c'est-à-dire pour $t_i$ appartenant à la phase Pa, par soustraction de la valeur de référence $\tilde{S}_k^{b,\varphi 1}$ déterminée. On obtient ainsi un signal utile $Su_k(t_i \in Pa)$, tel que $Su_k(t_i \in Pa) = S_k(t_i) - \tilde{S}_k^{b,\varphi 1}$. Du fait de la dérive de capteur, le signal utile $Su_k(t_i \in Pa)$ n'est pas sensiblement nul alors qu'il le devrait.

Lors de l'étape 153, on détermine la valeur de référence $Su_k^b$ du signal utile $Su_k(t_i \in Pa)$. Il s'agit par exemple de la valeur moyenne de ce signal utile sur une durée prédéfinie, avant l'instant $t_c$ et donc avant la phase Pb.

Lors de l'étape 154, on corrige le signal utile $Su_k(t_i \in Pb)$ associé au deuxième échantillon gazeux en lui soustrayant la valeur de référence $Su_k^b$ déterminée. On obtient ainsi un signal utile corrigé $Suc_k(t_i \in Pb)$ qui fait abstraction de cette dérive du capteur.

Lors de l'étape 160, on caractérise les composés d'intérêt à partir du signal utile corrigé $Suc_k(t_i \in Pb)$. Dans la mesure où cette dérive du capteur est corrigée, on obtient une caractérisation des composés d'intérêt d'une qualité améliorée.

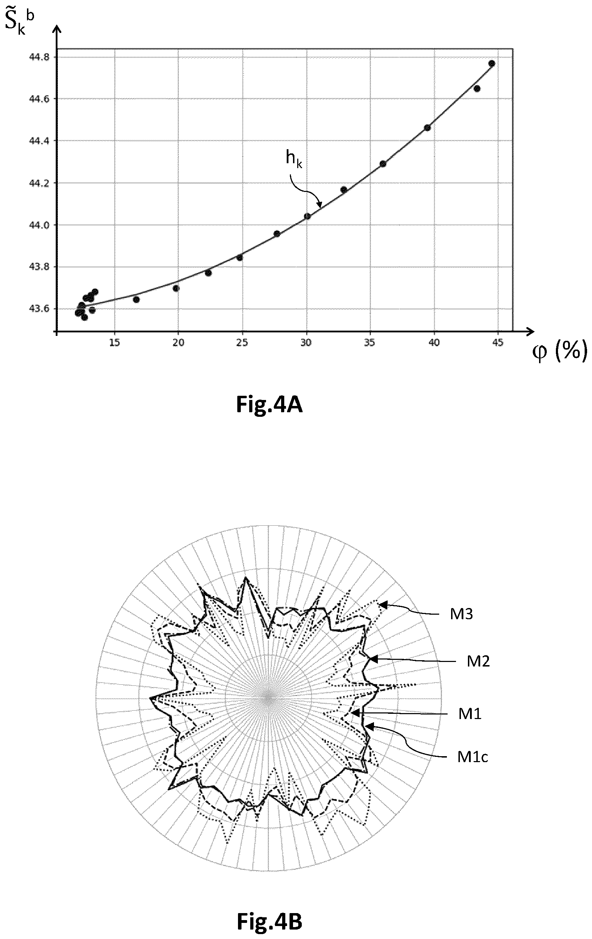

La phase de calibration 10 est maintenant décrite, en référence aux figures 4A et 4B, laquelle illustre un exemple de variation de la valeur de référence $\tilde{S}_k^b$ associée à un gaz de référence seul (i.e. sans composés cibles) en fonction de l'humidité relative $\varphi$. Lors de cette phase de calibration 10, on utilise le signe tilde sur la lettre S pour différentier les signaux de mesure acquis lors de cette phase 10 de ceux acquis lors de la phase de caractérisation 100.

Lors d'une étape 11, on injecte le gaz de référence dans la chambre de mesure 21. Le gaz de référence est donc formé du seul gaz porteur et ne contient pas les composés d'intérêt. Il présente une humidité relative $\varphi$ non nulle, qui varie dans le temps, de préférence par paliers.

Lors d'une étape 12, on détermine, pour chaque site sensible $23_k$ allant de 1 à N, à l'instant courant $t_i$, un signal de mesure $\tilde{S}_k(t_i)$ représentatif ici de la réflectivité

%$R_k(t_i)$ du site sensible $23_k$ considéré, et donc représentatif en outre de la réponse du nez électronique 1 en présence du gaz de référence dans la chambre de mesure 21. Cette étape est similaire à l'étape 120 et n'est donc pas décrite à nouveau. Dans la mesure où le gaz de référence ne comporte pas de composés d'intérêt, le signal de mesure $\tilde{S}_k(t_i)$ ne présente pas le régime transitoire d'assimilation Pb.1 et le régime stationnaire d'équilibre Pb.2. On peut donc déterminer une valeur de référence $\overset{\approx}{S}{}_k^b$ associé à une valeur d'humidité relative $\varphi$ donnée. Il s'agit de préférence d'une valeur moyenne de $\tilde{S}_k(t_i)$ sur une durée prédéfinie, où $\varphi$ est de préférence constante.

Lors de l'étape 13, on mesure l'humidité relative $\varphi(t_i)$ au cours du temps à l'aide du capteur d'humidité 26.

Lors de l'étape 14, on détermine la fonction de correction $h_k$ à partir des valeurs de référence $\overset{\approx}{S}{}_k^b$ déterminées et des valeurs d'humidité relative $\varphi$ mesurées. La fig.4A illustre un exemple de fonction de correction $h_k$ qui illustre la variation de la valeur de référence $\overset{\approx}{S}{}_k^b$ associée au gaz de référence (air humide, par exemple) en fonction de l'humidité relative. Dans cet exemple, la fonction de correction est une fonction polynomiale dont la paramétrisation, c'est-à-dire la détermination de l'ordre n du polynôme et des coefficients, est effectuée ici par régression polynomiale. D'autres types de fonctions de correction peuvent être utilisés, comme les fonctions logarithmiques, les réseaux de neurones à sigmoïdes, les mélanges gaussiens, etc. Et d'autres méthodes de paramétrisation peuvent être utilisées, comme la méthode des moindres carrés. Ainsi, à la suite de la phase de calibration 10, on obtient une fonction de correction $h_k$ associée à chaque site sensible $23_k$ qui permet de déterminer la valeur de référence $\overset{\approx}{S}{}_k^b$ associée au gaz de référence (air humide, par ex.) pour une humidité relative $\varphi$ donnée.

La figure 4B illustre les trois signatures M1, M2 et M3 représentées sur la fig.2A. La signature M 1c correspond au même deuxième échantillon gazeux que pour la signature M1, c'est-à-dire un échantillon gazeux formé d'air humide avec une humidité relative $\varphi2$ égale à 50% environ (donc avec une variation d'humidité relative $\Delta\varphi$) et dont les composés d'intérêt sont des molécules de butanol. Alors que la signature M1 est obtenue par un procédé de caractérisation selon un exemple de l'art antérieur, la signature M1c est obtenue par le procédé de caractérisation illustré sur la fig.3. On remarque que la signature M1c est superposée à la signature M2 qui correspond à une absence de variation d'humidité relative $\Delta\varphi$ entre les phases Pa et Pb. Aussi, le procédé de caractérisation selon ce mode de réalisation permet effectivement de réduire voire d'écarter le biais de mesure $\Delta S_k^{b,\Delta\varphi}$ associé à une différence $\Delta\varphi$ non nulle d'humidité relative entre les phases Pa et Pb.

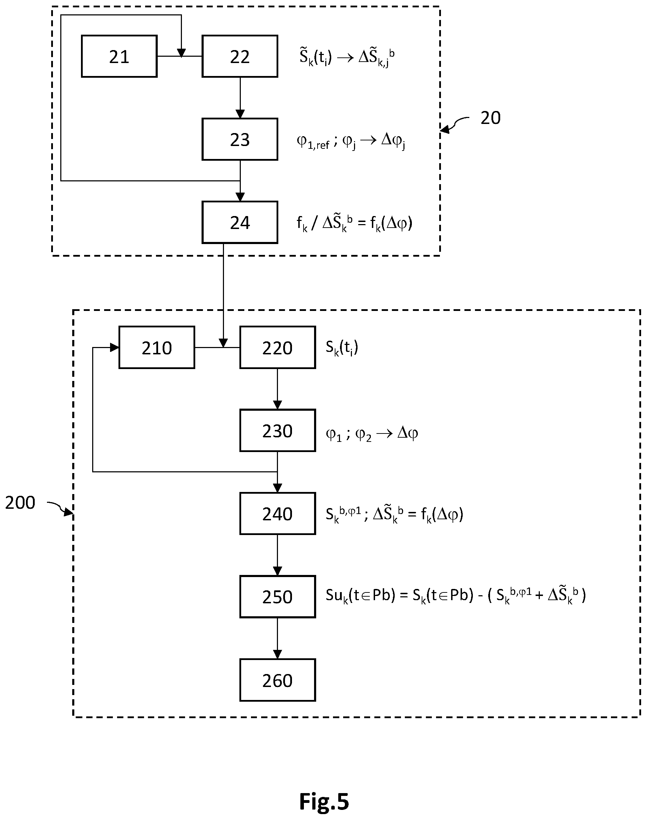

La figure 5 illustre un organigramme d'un procédé de caractérisation de composés d'intérêt selon un deuxième mode de réalisation, dans lequel le biais de mesure $\Delta S_k^{b,\Delta\varphi}$ lié à une différence $\Delta\varphi$ non nulle d'humidité relative entre les phases Pa et Pb est réduit voire écarté, la différence d'humidité relative $\Delta\varphi$ dans la chambre de mesure 21 étant définie entre une valeur $\varphi1$ lors de la phase initiale Pa, et une valeur $\varphi2$ différente de $\varphi1$ lors de la phase de caractérisation Pb. Ce procédé se distingue de celui décrit sur la fig.3 essentiellement en ce que le signal utile est corrigé en utilisant notamment une estimation de la différence de valeur de référence $\Delta\tilde{S}_k^{b,\Delta\varphi}$ obtenue à partir d'une fonction de correction $f_k$.

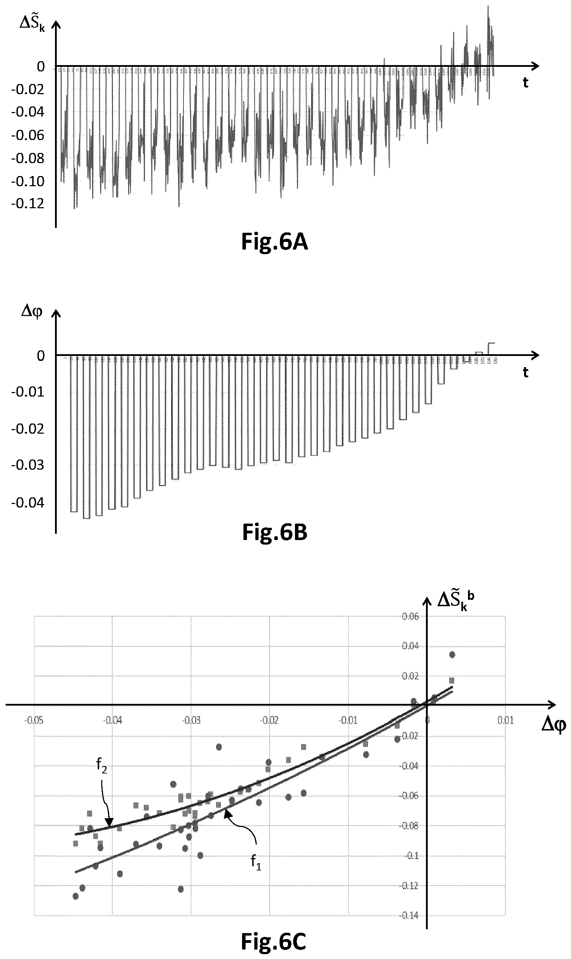

Lors d'une phase de calibration 20, on détermine la fonction de correction $f_k$. Cette phase est illustrée sur les figures 6A à 6C. L'objectif est de déterminer une fonction de correction $f_k$ exprimant la variation de la différence de valeur de référence $\Delta\overset{\approx}{S}{}_k^b$ en fonction d'une différence d'humidité relative $\Delta\varphi$.

Lors d'une étape 21, on effectue plusieurs cycles d'injection dans la chambre de mesure. Chaque cycle de rang j est formé d'une première injection d'un premier gaz de référence d'humidité relative $\varphi_{1,ref}$ constante et non nulle, suivie d'une deuxième injection d'un deuxième gaz de référence de rang j d'humidité relative $\varphi_j$ constante et différente de $\varphi_{1,ref}$. Au cours des différents cycles, l'humidité relative $\varphi_j$ varie, de sorte que l'on obtient plusieurs valeurs de la différence d'humidité relative $\Delta\varphi_j = \varphi_j - \varphi_{1,ref}$.

Lors d'une étape 22, on acquiert le signal de mesure $\tilde{S}_k(t)$ lors de l'étape 21. La fig.6A illustre plus précisément l'écart $\Delta\tilde{S}_k(t)$ entre les signaux de mesure associés aux deux injections pour différents cycles successifs pour un site sensible $23_k$ en fonction du temps. Plus précisément, dans cet exemple, au signal de mesure de la deuxième injection, on soustrait le signal de mesure de la première injection du même cycle. Aussi, comme le montre la fig.6A, l'écart $\Delta\tilde{S}_k(t)$ présente une valeur nulle lors de chaque première injection et une valeur non nulle lors des deuxièmes injections.

On détermine alors la différence $\Delta\overset{\approx}{S}{}_k^b$ entre les valeurs de référence des première et deuxième injections de chaque cycle. Il s'agit de déterminer la valeur de référence $\overset{\approx}{S}{}_k^b$ pour les première et deuxième injections de chaque cycle et d'en faire la différence. La valeur de référence $\overset{\approx}{S}{}_k^b$ est de préférence une valeur moyenne du signal de mesure $\tilde{S}_k(t_i)$ sur une durée prédéfinie.

Lors d'une étape 23, on mesure la différence d'humidité relative $\Delta\varphi$ entre les première et deuxième injections de chaque cycle. La fig.6B illustre la variation de la différence d'humidité relative $\Delta\varphi$ en fonction du

temps. On remarque que la différence $\Delta\varphi$ est nulle pour chaque première injection, et qu'elle est non nulle et varie dans le temps d'une deuxième injection à l'autre. On obtient ainsi une série de couples de valeurs $(\Delta\varphi_j \; ; \; \Delta\tilde{S}_{k,j}^b)_{j=1,M}$, M étant le nombre de cycles effectués.

Lors d'une étape 24, on détermine la fonction de correction $f_k$ à partir des valeurs déterminées de la différence de valeur de référence $\Delta\tilde{S}_{k,j}^b$ et des valeurs mesurées de la différence d'humidité relative $\Delta\varphi_j$. La fig.6C illustre un exemple de deux fonctions de calibration $f_1$, $f_2$ qui illustre la variation de la différence de valeur de référence $\Delta\tilde{S}_{k=1,2}^b$ associée au gaz de référence (air humide, par exemple) en fonction de la différence d'humidité relative $\Delta\varphi$, pour deux sites sensibles $23_1$ et $23_2$. Dans cet exemple, la fonction de correction est une fonction polynomiale dont la paramétrisation, c'est-à-dire la détermination de l'ordre n du polynôme et des coefficients, est effectuée ici par régression polynomiale. D'autres types de fonctions de calibration peuvent être utilisés, comme les fonctions logarithmiques, les réseaux de neurones à sigmoïdes, les mélanges gaussiens, etc., comme pour l'exemple de la fig.3. Ainsi, à la suite de la phase de calibration 20, on obtient une fonction de correction $f_k$ associée à chaque site sensible $6_k$ qui permet de déterminer la différence de valeur de référence $\Delta\tilde{S}_k^b$ associée au gaz de référence pour une différence d'humidité relative $\Delta\varphi$ donnée.

Puis, la phase de caractérisation 200 est effectuée. Lors d'une étape 210, on effectue l'étape d'injection fluidique dans la chambre de mesure 21 du nez électronique 1. Cette étape comporte une première phase initiale Pa d'injection du gaz de référence (gaz porteur sans les composés d'intérêt), une deuxième phase de caractérisation Pb au cours de laquelle est injecté l'échantillon gazeux (gaz porteur avec les composés d'intérêt), puis une troisième phase de dissociation Pc. Le gaz de référence et l'échantillon gazeux présentent des humidités relatives différentes, notées $\varphi1$ pour le gaz de référence et $\varphi2$ pour l'échantillon gazeux.

Lors d'une étape 220, on détermine, pour chaque site sensible $23_k$ allant de 1 à N, à l'instant courant $t_i$, un signal de mesure $S_k(t_i)$ représentatif de la réponse du nez électronique 1 en présence du gaz de référence puis de l'échantillon gazeux dans la chambre de mesure 21. Cette étape est similaire à l'étape 120 et n'est pas décrite en détail à nouveau.

Lors d'une étape 230, on mesure l'humidité relative dans la chambre de mesure 21 lors des phases Pa et Pb. Pour cela, le capteur d'humidité 26 mesure l'humidité relative $\varphi$ lors des phases Pa et Pb et transmet les valeurs mesurées à l'unité de traitement 30. L'humidité relative $\varphi2$ (phase Pb) est ici différence de la valeur $\varphi1$ (phase Pa). L'unité de traitement 30 détermine ensuite la différence d'humidité relative $\Delta\varphi = \varphi2 - \varphi1$.

Lors d'une étape 240, on détermine l'estimation de la différence de valeur de référence $\Delta\tilde{S}_k^b$ à partir de la différence d'humidité relative $\Delta\varphi$ mesurée. Cette différence de valeur de référence $\Delta\tilde{S}_k^b$ comme l'illustre la fig.2B, correspond à l'impact sur le signal de mesure associé l'échantillon gazeux qu'induit la différence d'humidité relative $\Delta\varphi$ entre les phases Pa et Pb. Cette différence de valeur de référence $\Delta\tilde{S}_k^b$ est estimée à partir de la fonction de correction $f_k$ et à partir de la différence $\Delta\varphi$ mesurée.

Puis, on détermine également la valeur de référence $S_k^{b,\varphi1}$ associée au gaz de référence à partir du signal de mesure $S_k(t_i \in Pa)$. Il s'agit de préférence d'une valeur moyenne du signal de mesure $S_k(t_i \in Pa)$ pendant la phase Pa sur une durée prédéfinie.

Lors d'une étape 250, on corrige le signal de mesure $S_k(t_i)$ associé à l'échantillon gazeux, c'est-à-dire pour $t_i$ appartenant à la phase Pb, par soustraction de l'estimation de la différence de valeur de référence $\Delta\tilde{S}_k^b$ pour la différence d'humidité relative $\Delta\varphi$ mesurée, et par soustraction de la valeur de référence $S_k^{b,\varphi1}$ associée au gaz de référence lors de la phase Pa. On obtient ainsi un signal utile $Su_k(t_i \in Pb)$. Autrement dit,

$$Su_k(t_i \in Pb) = S_k(t_i \in Pb) - [\, \Delta\tilde{S}_k^b + S_k^{b,\varphi1} \,]$$

Ainsi, dans le cadre de ce mode de réalisation, on calcule le signal utile associé à l'échantillon gazeux, i.e. celui comprenant les composés d'intérêt mais ayant subi une variation d'humidité relative non nulle $\Delta\varphi$, par correction de son signal de mesure $S_k(t_i \in Pb)$ en lui soustrayant d'une part l'impact $\Delta\tilde{S}_k^b$ qu'induit la différence d'humidité relative $\Delta\varphi$, et d'autre part la valeur de référence $S_k^{b,\varphi1}$. Aussi, ce mode de réalisation permet d'écarter le biais de mesure $\Delta S_k^{b,\Delta\varphi}$ associé à la différence d'humidité relative $\Delta\varphi$, et également d'écarter l'éventuelle dérive de capteur.

Lors d'une étape 260, on caractérise les composés d'intérêt à partir des signaux utiles $Su_k(t_i \in Pb)$. On extrait de ces signaux une valeur d'équilibre, i.e. stationnaire, pour fournir une représentation sous forme d'un histogramme, d'un diagramme en radar, ou autre, formant la signature des composés cibles.

Aussi, le procédé de caractérisation selon ce mode de réalisation permet également d'améliorer la qualité de la caractérisation des composés d'intérêt, en limitant voire écartant le biais de mesure $\Delta S_k^{b,\Delta\varphi}$ lié à une différence non nulle $\Delta\varphi$ de l'humidité relative entre les phases Pa et Pb, mais également en limitant voire écartant une éventuelle dérive de capteur entre la phase de calibration 20 et la phase de caractérisation 200. La caractérisation des composés d'intérêt est alors rendue plus juste et précise, dans la mesure où elle porte sur les composés d'intérêt seul et non pas ou peu sur le gaz porteur qui a connu une variation de son humidité relative.

Cependant, le nez électronique 1 peut également présenter une autre dérive de capteur, dans le sens où la fonction de correction $f_k$ ou $h_k$ prédéterminée et enregistrée dans la mémoire 31 de l'unité de traitement 30 peut ne plus être totalement représentative de la réponse du dispositif de mesure 20 associé au gaz présent dans la chambre de mesure 21. Aussi, il est recommandé d'effectuer une recalibration du nez électronique 1. Ici, le nez électronique 1 est adapté à déterminer une nouvelle fonction de correction $f_k$ ou $h_k$, c'est-à-dire la nouvelle paramétrisation de cette fonction de correction, ici sans nécessiter un retour en atelier ou une caractérisation nouvelle avec le nez électronique associé au système de la figure 2C. Cette phase de recalibration 300, 400 est dite *on-line*, et peut donc être effectuée entre deux phases de caractérisation 100, 200.

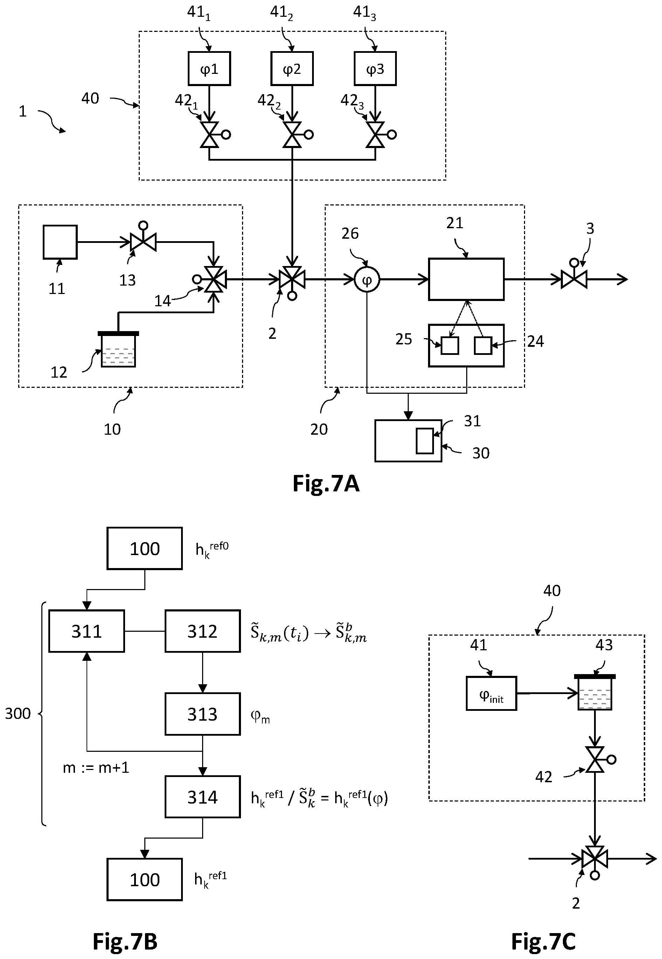

La figure 7A est une vue schématique et partielle d'un nez électronique 1 selon un mode de réalisation dans lequel il est configuré pour effectuer une phase de recalibration 300. Ici, le nez électronique 1 est similaire à celui décrit sur la fig.2C, et s'en distingue notamment en ce qu'il comporte un dispositif fluidique de recalibration 40, et en ce que l'unité de traitement 30 est adaptée à effectuer une phase de recalibration 40.

Le nez électronique 1 comporte de préférence une vanne trois voies 2 qui permet de raccorder à la chambre de mesure 21, d'une part le dispositif fluidique d'alimentation 10 en composés cibles, et d'autre part le dispositif fluidique de recalibration 40 fournissant un ou plusieurs gaz de référence présentant différentes valeurs d'humidité relative dans le temps.

Dans cet exemple, le dispositif fluidique de recalibration 40 comporte au moins trois sources en gaz de référence 41 (ici $41_1$, $41_2$, $41_3$) présentant des humidités relatives différentes $\varphi 1$, $\varphi 2$ et $\varphi 3$. De préférence, ces trois valeurs d'humidité relative présentent un écart maximal pouvant être de l'ordre de 20%, voire davantage, et peuvent présentent un écart relatif entre elles d'au moins 5%. Comme précédemment, les gaz de référence sont dépourvus de composés cibles. Bien entendu, d'une manière générale, le dispositif d'alimentation peut comporter un plus grand nombre de sources 41. Chaque source 41 est ici associé à une vanne 42.

La figure 7B est un exemple de procédé d'utilisation du nez électronique, comportant une phase de recalibration 300 qui repose sur un principe similaire à celui décrit en référence à la phase de calibration 10 illustrée sur la fig.3.

Il comporte au moins une phase de caractérisation 100 de composés cibles. Cette phase est identique à celle décrite en référence à la fig.3. Ici, la phase de caractérisation 100 comporte des étapes de correction 140, 150 du signal utile $Su_k$ à partir d'un paramètre correctif, ici une valeur de référence
$$\tilde{S}_k^{b,\varphi 2} = h_k(\varphi 2)$$
représentative du signal de mesure associé au gaz de référence pour une humidité relative $\varphi 2$. Ce paramètre correctif est déterminé à partir d'une fonction de correction notée ici $h_k^{ref0}$ et déterminée lors de la phase de calibration 10. Cette phase de calibration 10 peut avoir été effectuée en atelier, avant la mise en service effective du nez électronique 1.

On souhaite maintenant recalibrer le nez électronique, c'est-à-dire ici déterminer à nouveau la fonction de correction, notée alors $h_k^{ref1}$, dans la mesure où une dérive de capteur peut avoir été identifiée. Il s'agit ici d'actualiser les différents coefficients qui paramétrisent la fonction de correction.

Pour cela, la phase de recalibration 300 comporte une étape 311 d'injection d'un premier gaz de référence dans la chambre de mesure, ici le gaz de référence provenant de la source $41_1$ et présentant une humidité relative $\varphi 1$. Aussi, la vanne 2 bloque l'écoulement provenant du dispositif fluidique d'alimentation 10, et autorise l'écoulement provenant du dispositif fluidique de recalibration 40. La vanne $42_1$ raccordée à la sortie de la source $41_1$ est ouverte alors que les vannes $42_2$ et $42_3$ sont fermées.

Lors de l'étape 312, le dispositif de mesure 20 acquiert le signal de mesure $\tilde{S}_{k,m=1}(t)$ au cours de l'étape d'injection 311, puis l'unité de traitement 30 détermine la valeur de référence *(baseline)* associée $\tilde{S}_{k,1}^b$, laquelle est stockée dans la mémoire 31.

Lors de l'étape 313, au cours de l'étape d'injection 311, on mesure l'humidité relative $\varphi_1$ au cours du temps à l'aide du capteur d'humidité 26. Cette étape est facultative si l'on considère que l'on connaissait déjà la valeur d'humidité relative du gaz de référence présent dans le réservoir $41_1$, et que la valeur d'humidité relative dans la chambre de mesure 21 est égale à celle connue dans le réservoir $41_1$. Cette valeur d'humidité relative $\varphi 1$ est stockée dans la mémoire 31 de l'unité de traitement 30.

Les étapes 311, 312 et 313 sont réitérées pour les différents gaz de référence stockés dans les sources 41 avec m=1-3 (i.e. allant de 1 à 3). Aussi, la mémoire comporte ici trois couples de valeurs $(\varphi_m \, ; \, \tilde{S}_{k,m}^b)_{m=1\text{-}3}$.

Lors de l'étape 314, l'unité de traitement 30 détermine la nouvelle fonction de correction $h_k^{ref1}$, par exemple par régression, moindre carré, ou autre, à partir des couples de valeurs $(\varphi_m \, ; \, \tilde{S}_{k,m}^b)_{m=1\text{-}3}$. La nouvelle fonction de correction $h_k^{ref1}$ est stockée dans la mémoire, et remplace l'ancienne fonction $h_k^{ref0}$.

Ainsi, le nez électronique 1 est en mesure d'effectuer une phase de recalibration 300, et ainsi permet de résoudre le problème de dérive de capteur associé à la fonction de correction. De plus, le fait que la recalibration soit *on-line* permet d'améliorer la fiabilité du nez électronique 1 sur les temps longs, et évite la nécessité d'effectuer la recalibration dans le cadre d'un retour en atelier.

Le procédé d'utilisation peut ainsi comporter au moins une phase suivante de caractérisation 100 de composés cibles effectuée à la suite de la phase de recalibration 300. Cette phase 100 est identique à celle décrite en référence à la fig.3 ou peut être identique à celle décrite en référence à la fig.5. Ici, la phase suivante de caractérisation 100 comporte des étapes de correction 140, 150 du signal utile $Su_k$ à partir d'un paramètre correctif. Ce paramètre correctif est déterminé à partir de la fonction de correction actualisée notée ici $h_k^{ref1}$ et déterminée lors de la phase de recalibration 300, et non plus à partir de l'ancienne fonction de correction $h_k^{ref0}$.

Par ailleurs, les sources 41 peuvent être des réservoirs préremplis en gaz de référence de différentes humidités relatives, ou, en variante, peuvent être remplies par le nez électronique 1 lui-même. Ainsi, les réservoirs 41 peuvent être raccordés à l'environnement extérieur par le biais d'un conduit fluidique connecté à un capteur d'humidité relative (non représenté). Les réservoirs 41 sont initialement vides, et sont remplis les uns après les autres à partir d'air humide extérieur lorsque l'humidité relative de cet air humide varie. Ainsi, au cours d'une journée, ou au cours d'une saison, l'humidité relative de l'air extérieur varie, par exemple allant de 15% à 50% (par ex. en hiver et en été), ou allant de 30% à 70% (par ex. au printemps et en automne). Aussi, le nez électronique 1 mesure régulièrement l'humidité relative de l'air extérieur par le capteur d'humidité relative, et lorsque l'air humide présente une valeur $\varphi_m$ prédéfinie, le nez électronique effectue un remplissage du réservoir $41_m$ jusqu'à ce que les différents réservoirs 41 soient remplis d'air humide de différentes humidités relatives $\varphi_m$.

La figure 7C est une vue schématique d'une partir d'un nez électronique 1 selon une variante de réalisation, qui diffère de celui illustré sur la fig.7A essentiellement par le dispositif fluidique de recalibration 40.

Dans cet exemple, le dispositif fluidique de recalibration 40est adapté à alimenter la chambre de mesure 21 à partir d'un même réservoir 41 d'un gaz de référence associé à un réservoir 43 d'une solution hydrophile, et non pas à partir de plusieurs réservoirs distincts. Ici également, le gaz de référence ne contient pas de composés cibles.

Le réservoir 41 contient un gaz de référence présentant une humidité relative $\varphi_{init}$ non nulle. Il est raccordé à l'espace de tête du réservoir 43 qui contient une solution liquide hydrophile, par exemple un ester d'acide nitrique. L'espace de tête est ensuite raccordé à la vanne 2, ici par une vanne 42.

Aussi, lors de la phase de recalibration 300, le gaz de référence passe par le réservoir 43 de la solution hydrophile, puis est introduit dans la chambre de mesure 21. Dans un premier temps, il présente, dans la chambre de mesure 21, l'humidité relative $\varphi_{init}$, puis, à mesure que la solution hydrophile adsorbe des molécules d'eau, le gaz de référence présente une humidité relative qui diminue, passant ainsi à une valeur intermédiaire $\varphi_{int}$ inférieure à $\varphi_{init}$ (appauvrissement en humidité), pour ensuite atteindre une valeur finale $\varphi_f$ lorsque l'équilibre thermodynamique est atteint dans l'espace de tête du réservoir 43. Aussi, lors de l'étape 314, l'unité de traitement 30 aura obtenu au moins trois couples de valeurs $(\varphi_m \; ; \; \tilde{S}_{k,m}^{b})_{m=1-3}$ lui permettant de déterminer la nouvelle fonction de correction $h_k^{ref1}$.

Ici, le réservoir 41 du gaz de référence d'humidité relative $\varphi_{init}$ peut avoir été rempli en atelier, ou en variante, peut avoir été rempli par le nez électronique 1 à partir d'air humide de l'environnement extérieur. Pour cela, comme décrit précédemment, le réservoir 41 est raccordé à l'environnement extérieur au moyen d'un conduit fluidique équipé à un capteur d'humidité relative (non représenté). Lorsque l'air extérieur présente une humidité relative sensiblement égale à $\varphi_{init}$, le nez électronique 1 effectue le remplissage du réservoir 41.

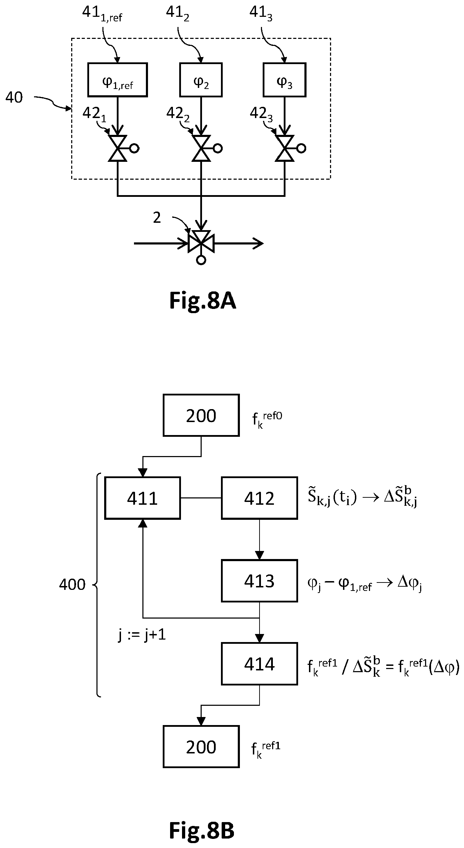

La figure 8A est une vue schématique et partielle d'un nez électronique 1 selon un autre mode de réalisation dans lequel il est configuré pour effectuer une phase de recalibration 400. Ici, le nez électronique 1 est similaire à celui décrit sur la fig.7A, et s'en distingue notamment par le dispositif fluidique de recalibration 40.

Dans cet exemple, le dispositif fluidique de recalibration 40 comporte trois sources 41 en gaz de référence, une source $41_{1,ref}$ d'un gaz de référence à une humidité relative $\varphi_{1,ref}$, et des sources $41_2$ et 41s présentant des humidités relatives $\varphi_2$ et $\varphi_3$. De préférence, ces valeurs $\varphi_2$ et $\varphi_3$ présentent un écart relatif avec $\varphi_{1,ref}$ et entre elles de préférence d'au moins 5%. Bien entendu, le dispositif fluidique de recalibration 40 peut comporter un plus grand nombre de réservoirs. Comme précédemment, les gaz de référence sont dépourvus de composés cibles.

La figure 8B est un exemple de procédé d'utilisation du nez électronique, comportant une phase de recalibration 400 qui repose sur un principe similaire à celui décrit en référence à la phase de calibration 20 illustrée sur la fig.5.

Il comporte au moins une phase de caractérisation 200 de composés cibles. Cette phase est identique à celle décrite en référence à la fig.5. Ici, la phase de caractérisation 200 comporte une étape de correction 240, 250 du signal utile $Su_k$ à partir d'un paramètre correctif $\Delta \tilde{S}_k^{b}$. Ce paramètre correctif est déterminé à partir de la fonction de correction notée ici $f_k^{ref0}$ et déterminée lors de la phase de calibration 20. Cette phase de calibration 20 peut avoir été effectuée en atelier, avant la mise en service effective du nez électronique 1.

On souhaite maintenant recalibrer le nez électronique, c'est-à-dire ici déterminer à nouveau la fonction de correction, notée alors $f_k^{ref1}$, dans la mesure où une dérive de capteur peut avoir été identifiée. L'objectif est de déterminer la nouvelle fonction de correction $f_k$ exprimant la variation de la différence de valeur de référence $\Delta \tilde{S}_k^b$ en fonction d'une différence d'humidité relative $\Delta \varphi$. Il s'agit ici d'actualiser les différents coefficients qui paramétrisent la fonction de correction.

Lors d'une étape 411, on effectue plusieurs cycles d'injection de gaz de référence dans la chambre de mesure 21. Les gaz de référence ne contiennent pas des composés d'intérêt. A chaque cycle est associée une valeur de différence d'humidité relative $\Delta \varphi_j = \varphi_j - \varphi_{1,ref}$. Pour cela, chaque cycle d'injection est formé d'une première injection du premier gaz de référence d'humidité relative $\varphi_{1,ref}$, suivie d'une deuxième injection d'un deuxième gaz de référence d'une humidité relative $\varphi_j$, avec j = 2,3..., différente de $\varphi_{1,ref}$.

Au cours des différents cycles, l'humidité relative $\varphi_j$ varie, de sorte que l'on obtient, lors de l'étape 413, plusieurs valeurs de la différence d'humidité relative $\Delta \varphi_j = \varphi_j - \varphi_{ref}$. Ces valeurs sont transmises à l'unité de traitement 30 et enregistrées dans la mémoire 31.

Lors de l'étape 412, on acquiert le signal de mesure $\tilde{S}_k(t)$ lors des différents cycles d'injection. Ainsi, lors du cycle j=2, on acquiert le signal de mesure $\tilde{S}_k(t)$ associé au gaz de référence à $\varphi_{1,ref}$, puis le signal de mesure $\tilde{S}_k(t)$ associé au gaz de référence à $\varphi_2$. L'unité de traitement détermine alors la valeur de référence $\tilde{S}_{k,1}^b$ associée au gaz de référence à $\varphi_{1,ref}$, puis détermine ensuite la valeur de référence $\tilde{S}_{k,2}^b$ associée au gaz de référence à $\varphi_2$. Elle détermine ensuite l'écart $\Delta \tilde{S}_{k,2}^b$ entre ces valeurs de référence. La différence d'humidité relative est alors $\Delta \varphi_2$.

Les étapes 411, 412 et 413 sont réitérées pour les différents gaz de référence avec ici j=2,3 (2 cycles). Aussi, la mémoire comporte ici deux couples de valeurs $(\Delta \varphi_j \; ; \; \Delta \tilde{S}_{k,j}^b)_{j=1,2}$.

Lors de l'étape 414, l'unité de traitement détermine la nouvelle fonction de correction $f_k^{ref1}$, par exemple par régression, moindre carré, ou autre à partir des couples de valeurs $(\Delta \varphi_j \; ; \; \Delta \tilde{S}_{k,j}^b)_{j=1,2}$. La nouvelle fonction de correction $f_k^{ref1}$ est stockée dans la mémoire 31, et remplace l'ancienne fonction $f_k^{ref0}$.

Ainsi, le nez électronique 1 est en mesure d'effectuer une phase de recalibration 400, et ainsi permet de résoudre le problème de dérive de capteur associé à la fonction de correction. De plus, le fait que la recalibration soit *on-line* permet d'améliorer la fiabilité du nez électronique sur les temps longs, et évite la nécessité de recalibration dans le cadre d'un retour en atelier. Le procédé d'utilisation peut alors comporter une nouvelle phase de caractérisation 200, laquelle utilisera la nouvelle fonction de correction $f_k^{ref1}$.

Des modes de réalisation particuliers viennent d'être décrits. Différentes variantes et modifications apparaîtront à l'homme du métier.

## Revendications

1. Procédé de recalibration d'un nez électronique (1) adapté à caractériser des composés cibles présents dans un échantillon gazeux introduit dans une chambre de mesure (21), celle-ci comportant au moins un site sensible ($23_k$) ayant des récepteurs avec lesquels les composés cibles sont aptes à interagir par adsorption/désorption, le nez électronique (1) comportant une unité de traitement (30) dans laquelle est préenregistrée une première fonction de correction ($f_k^{ref0}$, $h_k^{ref0}$) exprimant une variation d'un paramètre représentatif du signal de mesure associé à un gaz de référence en fonction d'une humidité relative, le procédé comportant les étapes suivantes :

   ○ injections successives (311, 411), dans la chambre de mesure (21), de gaz de référence ne contenant pas de composés cibles, les gaz de référence injectés les uns après les autres présentant différentes valeurs d'humidité relative ($\varphi$) non nulles prédéterminées ;
   ○ détermination (312, 412), au cours de chaque injection, d'un signal de mesure ($S_k(t_i)$) représentatif des interactions des récepteurs avec le gaz de référence présent, à différents instants de mesure, en réponse à un signal d'excitation émis au niveau du site sensible ($23_k$), puis détermination, pour chaque gaz de référence, d'une valeur de référence ($\tilde{S}_k^b$) représentative du signal de mesure ($S_k(t_i)$) déterminé, associée à l'humidité relative ($\varphi$) du gaz de référence présent ;
   ○ détermination (314, 414) d'une deuxième fonction de correction ($f_k^{ref1}$, $h_k^{ref1}$) exprimant une variation d'un paramètre ($\tilde{S}_k^b$ ; $\Delta \tilde{S}_k^b$) représentatif du signal de mesure associé au gaz de référence en fonction de l'humidité relative ($\varphi$ ; $\Delta \varphi$), à partir des valeurs de référence ($\tilde{S}_k^b$) déterminées et des valeurs d'humidité relative ($\varphi$) prédéterminées, la deuxième fonction de correction ($f_k^{ref1}$, $h_k^{ref1}$) étant ensuite enregistrée dans l'unité de traitement (30) en remplacement de la première fonction de correction ($f_k^{ref0}$, $h_k^{ref0}$).

**2.** Procédé de recalibration selon la revendication 1, dans lequel la valeur de référence ($\tilde{S}_{k'}^{b}$) est une moyenne d'au moins une partie du signal de mesure ($S_k(t_i)$) correspondant ; et le paramètre ($\tilde{S}_{k'}^{b}$ ; $\Delta\tilde{S}_{k'}^{b}$) représentatif du signal de mesure est égal à la valeur de référence ($\tilde{S}_{k'}^{b}$).

**3.** Procédé de recalibration selon la revendication 1 ou 2, dans lequel l'étape d'injections successives comporte au moins trois injections de différents gaz de référence les uns après les autres, à partir de différents réservoirs (41).

**4.** Procédé de recalibration selon la revendication 1 ou 2, dans lequel l'étape d'injections successives comporte une injection d'un même gaz de référence, provenant d'un réservoir (41) dans lequel il présente une valeur initiale ($\varphi_{init}$) d'humidité relative et passant, avant de rejoindre la chambre de mesure (21) dans un réservoir (43) partiellement rempli par un liquide hydrophile, de sorte que le gaz de référence introduit dans la chambre de mesure (21) présente une humidité relative qui diminue de la valeur initiale ($\varphi_{init}$) à une valeur finale ($\varphi_f$) en passant par une valeur intermédiaire ($\varphi_{int}$).

**5.** Procédé de recalibration selon la revendication 1, dans lequel l'étape d'injections successives comporte plusieurs cycles d'injection, chaque cycle étant formé d'une injection d'un premier gaz de référence présentant une première humidité relative ($\varphi_{1,ref}$) et d'une injection de différents deuxièmes gaz de référence présentant différentes deuxièmes humidités relatives ($\varphi_j$), de manière à obtenir plusieurs écarts d'humidité relative ($\Delta\varphi_j$) entre chaque deuxième humidité relative ($\varphi_j$) et la première humidité relative ($\varphi_{1,ref}$), les écarts d'humidité relative ($\Delta\varphi_j$) étant différents entre eux.

**6.** Procédé de recalibration selon la revendication 5, dans lequel le nez électronique (1) comporte une première source ($41_1$) du premier gaz de référence présentant une première humidité relative ($\varphi_{1,ref}$), et différentes deuxièmes sources ($41_j$) de deuxièmes gaz de référence présentant les différentes deuxièmes humidités relatives ($\varphi_2$).

**7.** Procédé de recalibration selon la revendication 5 ou 6, dans lequel le paramètre ($\tilde{S}_k^{b}$ ; $\Delta\tilde{S}_k^{b}$) représentatif du signal de mesure est égal à un écart de référence ($\Delta\tilde{S}_k^{b}$) entre des valeurs de référence ($\tilde{S}_k^{b}$) associés au premier gaz de référence et à chaque deuxième gaz de référence, chaque écart de référence ($\Delta\tilde{S}_k^{b}$) étant différents entre eux.

**8.** Procédé d'utilisation du nez électronique (1), comportant plusieurs phases de caractérisation des composés cibles, dont une première phase de caractérisation effectuée avant une recalibration mise en oeuvre par le procédé selon l'une quelconque des revendications précédentes, et une deuxième phase de caractérisation effectuée après ladite recalibration, chaque phase de caractérisation comportant les étapes suivantes :

○ injection dans la chambre de mesure (21) :

• pendant une première phase Pa, d'un gaz de référence ne contenant pas les composés cibles, puis
• pendant une deuxième phase Pb, d'un échantillon gazeux comportant lesdits composés cibles ;

○ détermination, au cours de l'étape d'injection, d'un signal de mesure représentatif des interactions des récepteurs avec au moins le gaz présent, à différents instants de mesure, en réponse à un signal d'excitation émis au niveau du site sensible ;
○ mesure de valeurs $\varphi 1$, $\varphi 2$ d'humidité relative respectivement lors des première et deuxième phases Pa, Pb dans la chambre de mesure, $\varphi 2$ étant différente de $\varphi 1$ ;
○ détermination d'un paramètre correctif associé au site sensible, à partir d'au moins la valeur mesurée $\varphi 2$ d'humidité relative et d'une fonction de correction prédéterminée ($f_k$, $h_k$) exprimant une variation d'un paramètre représentatif du signal de mesure associé au gaz de référence en fonction de l'humidité relative ;
○ détermination d'un signal utile par correction du signal de mesure associé à l'échantillon gazeux, à partir d'au moins le paramètre correctif déterminé ;
○ caractérisation des composés cibles à partir du signal utile ;
○ la première phase de caractérisation utilisant une première fonction de correction ($f_k^{ref0}$, $h_k^{ref0}$) préenregistrée ; la recalibration déterminant une deuxième fonction de correction ($f_k^{ref1}$, $h_k^{ref1}$) ; la deuxième phase de caractérisation utilisant la deuxième fonction de correction ($f_k^{ref1}$, $h_k^{ref1}$) déterminée.

**9.** Nez électronique (1) de caractérisation de composés cibles, adapté à la mise en oeuvre du procédé de recalibration selon les revendications 1 à 7 et du procédé d'utilisation selon la revendication 8, comportant :

○ un dispositif de mesure (20), comportant :

• une chambre de mesure (21), adaptée à recevoir un échantillon gazeux contenant des composés d'intérêt à caractériser, et comportant au moins un site sensible (23) ayant des récepteurs avec lesquels les composés cibles sont aptes à interagir par adsorption/désorption ;
• une unité de mesure (24, 25), adaptée à déterminer un signal de mesure ($S_k(t_i)$) représentatif des interactions des récepteurs avec au moins le gaz présent, à différents instants de mesure, en réponse à un signal d'excitation émis au niveau du site sensible ;
• un capteur d'humidité (26), adapté à mesurer des valeurs d'humidité relative du gaz présent dans la chambre de mesure (21) ;

○ un dispositif fluidique d'alimentation (10), comportant :

• une source (11) d'un gaz de référence, raccordée à la chambre de mesure (21) ;
• une source (12) de composés cibles, raccordée à la chambre de mesure (21), ledit échantillon gazeux étant formé d'un gaz et des composés cibles ;

○ un dispositif fluidique de recalibration (40), comportant au moins une source (41) d'au moins un gaz de référence, adaptée à alimenter la chambre de mesure (21) avec des gaz de référence présentant différentes valeurs d'humidité relative ;

○ une unité de traitement (30), adaptée à :

• déterminer un paramètre correctif ( $\tilde{S}_k^b ; \Delta\tilde{S}_k^b$ ) à partir de :

- au moins une valeur mesurée ($\varphi_2$) de l'humidité relative ;
- une fonction de correction prédéterminée ($f_k$, $h_k$) et associée au site sensible ($23_k$), exprimant une variation d'un paramètre ( $\tilde{S}_k^b ; \Delta\tilde{S}_k^b$ ) représentatif du signal de mesure associé à un gaz de référence en fonction de l'humidité relative ($\varphi$ ; $\Delta\varphi$) mesurée ;

• déterminer un signal utile ($Su_k(t_i \in Pb)$) par correction du signal de mesure ($S_k(t_i \in Pb)$) associé à l'échantillon gazeux à partir d'au moins le paramètre correctif ( $\tilde{S}_k^b ; \Delta\tilde{S}_k^b$ ) déterminé, et
• caractériser les composés cibles à partir du signal utile ($Su_k(t_i \in Pb)$) déterminé ;
• déterminer la fonction de correction ($f_k$, $h_k$), à partir des différentes valeurs d'humidité relative du gaz de référence présent dans la chambre de mesure (21), et des signaux de mesure ($S_k(t_i)$) correspondants.

**Patentansprüche**

**1.** Verfahren zur Rekalibrierung einer elektronischen Nase (1), die geeignet ist, Zielverbindungen zu charakterisieren, die in einer gasförmigen Probe vorhanden sind, welche in eine Messkammer (21) eingeführt wird, wobei diese mindestens eine empfindliche Stelle ($23_k$) umfasst, die Rezeptoren aufweist, mit denen die Zielverbindungen durch Adsorption/Desorption wechselwirken können, wobei die elektronische Nase (1) eine Verarbeitungseinheit (30) umfasst, in der eine erste Korrekturfunktion ($f_k^{ref0}$, $h_k^{ref0}$) vorgespeichert ist, die eine Änderung eines Parameters, der für das einem Referenzgas zugeordnete Messsignal repräsentativ ist, in Abhängigkeit von einer relativen Feuchtigkeit ausdrückt, wobei das Verfahren die folgenden Schritte umfasst:

- aufeinanderfolgende Injektionen (311, 411) von Referenzgasen, die keine Zielverbindungen enthalten, in die Messkammer (21), wobei die nacheinander injizierten Referenzgase vorbestimmte unterschiedliche relative Feuchtigkeitswerte ($\phi$) ungleich Null aufweisen;
- Bestimmen (312, 412), im Laufe jeder Injektion, eines Messsignals ($S_k(t_i)$), das für die Wechselwirkungen der Rezeptoren mit dem vorhandenen Referenzgas repräsentativ ist, zu unterschiedlichen Messzeitpunkten als Antwort auf ein Anregungssignal, das im Bereich der empfindlichen Stelle ($23_k$) ausgegeben wird, und anschließend Bestimmen, für jedes Referenzgas, eines Referenzwerts ( $\tilde{S}_k^b$ ), der für das bestimmte Messsignal ($S_k(t_i)$), das der relativen Feuchtigkeit ($\phi$) des vorhandenen Referenzgases zugeordnet ist, repräsentativ ist;

- Bestimmen (314, 414) einer zweiten Korrekturfunktion ($f_k^{ref1}$, $h_k^{ref1}$), die eine Änderung ei-

nes Parameters ( $\tilde{S}_k^b$ ; $\Delta\tilde{S}_k^b$ ), der für das dem Referenzgas zugeordnete Messsignal repräsentativ ist, in Abhängigkeit von der relativen Feuchtigkeit ($\phi$; $\Delta\phi$) ausdrückt, auf Grundlage der bestimmten Referenzwerte ( $\tilde{S}_k^b$ ) und der vorbestimmten relativen Feuchtigkeitswerte ($\phi$), wobei die zweite Korrekturfunktion ($f_k^{ref1}$, $h_k^{ref1}$) anschließend als Ersatz für die erste Korrekturfunktion ($f_k^{ref0}$, $h_k^{ref0}$) in der Verarbeitungseinheit (30) gespeichert wird.

2. Verfahren zur Rekalibrierung nach Anspruch 1, wobei der Referenzwert ( $\tilde{S}_k^b$ ) ein Mittelwert von mindestens einem Teil des entsprechenden Messsignals ($S_k(t_i)$) ist; und der Parameter ( $\tilde{S}_k^b$ ; $\Delta\tilde{S}_k^b$ ), der für das Messsignal repräsentativ ist, gleich dem Referenzwert ( $\tilde{S}_k^b$ ) ist.

3. Verfahren zur Rekalibrierung nach Anspruch 1 oder 2, wobei der Schritt der aufeinanderfolgenden Injektionen mindestens drei Injektionen unterschiedlicher Referenzgase nacheinander aus unterschiedlichen Behältern (41) umfasst.

4. Verfahren zur Rekalibrierung nach Anspruch 1 oder 2, wobei der Schritt der aufeinanderfolgenden Injektionen eine Injektion desselben Referenzgases umfasst, das aus einem Behälter (41) stammt, in dem es einen anfänglichen relativen Feuchtigkeitswert ($\phi_{init}$) aufweist, und bevor es in die Messkammer (21) gelangt, einen Behälter (43) durchläuft, der teilweise mit einer hydrophilen Flüssigkeit gefüllt ist, sodass das in die Messkammer (21) eingeführte Referenzgas eine relative Feuchtigkeit aufweist, die vom anfänglichen Wert ($\phi_{init}$) auf einen Endwert ($\phi_f$) abnimmt, wobei sie einen Zwischenwert ($\phi_{int}$) durchläuft.

5. Verfahren zur Rekalibrierung nach Anspruch 1, wobei der Schritt der aufeinanderfolgenden Injektionen mehrere Injektionszyklen umfasst, wobei jeder Zyklus von einer Injektion eines ersten Referenzgases, das eine erste relative Feuchtigkeit ($\phi$)$_{1,ref}$) aufweist, und einer Injektion unterschiedlicher zweiter Referenzgase, die unterschiedliche zweite relative Feuchtigkeiten ($\phi_j$) aufweisen, gebildet wird, um mehrere Abweichungen der relativen Feuchtigkeit ($\Delta\phi_j$) zwischen jeder zweiten relativen Feuchtigkeit ($\phi_j$) und der ersten relativen Feuchtigkeit ($\phi$)$_{1,ref}$) zu erhalten, wobei sich die Abweichungen der relativen Feuchtigkeit ($\Delta\phi_j$) voneinander unterscheiden.

6. Verfahren zur Rekalibrierung nach Anspruch 5, wobei die elektronische Nase (1) eine erste Quelle (41$_1$)

für das erste Referenzgas, das eine erste relative Feuchtigkeit ($\phi$)$_{1,ref}$) aufweist, und unterschiedliche zweite Quellen (41$_j$) für zweite Referenzgase, die die unterschiedlichen zweiten relativen Feuchtigkeiten ($\phi_2$) aufweisen, umfasst.

7. Verfahren zur Rekalibrierung nach Anspruch 5 oder 6, wobei der Parameter ( $\tilde{S}_k^b$ ; $\Delta\tilde{S}_k^b$ ), der für das Messsignal repräsentativ ist, gleich einer Referenzabweichung ( $\Delta\tilde{S}_k^b$ ) zwischen Referenzwerten ( $\tilde{S}_j^t$ ) ist, die dem ersten Referenzgas und jedem zweiten Referenzgas zugeordnet sind, wobei jede Referenzabweichung ( $\Delta\tilde{S}_k^b$ ) voneinander unterschiedlich ist.

8. Verfahren zur Verwendung der elektronischen Nase (1), das mehrere Phasen zur Charakterisierung der Zielverbindungen umfasst, darunter eine erste Charakterisierungsphase, die vor einer über das Verfahren nach einem der vorstehenden Ansprüche umgesetzten Rekalibrierung ausgeführt wird, und eine zweite Charakterisierungsphase, die nach der Rekalibrierung ausgeführt wird, wobei jede Charakterisierungsphase die folgenden Schritte umfasst:

- Injektion in die Messkammer (21):

-- während einer ersten Phase Pa eines Referenzgases, das die Zielverbindungen nicht enthält, und anschließend
-- während einer zweiten Phase Pb einer gasförmigen Probe, die die Zielverbindungen umfasst;

- Bestimmen, im Laufe des Injektionsschritts, eines Messsignals, das für die Wechselwirkungen der Rezeptoren mit mindestens dem vorhandenen Gas repräsentativ ist, zu unterschiedlichen Messzeitpunkten als Antwort auf ein Anregungssignal, das im Bereich der empfindlichen Stelle ausgegeben wird;
- Messen von relativen Feuchtigkeitswerten $\phi_1$, $\phi_2$ jeweils bei der ersten und der zweiten Phase Pa, Pb in der Messkammer, wobei sich $\phi_2$ von $\phi_1$ unterscheidet;
- Bestimmen eines Korrekturparameters, der der empfindlichen Stelle zugeordnet ist, auf Grundlage mindestens des gemessenen relativen Feuchtigkeitswerts $\phi_2$ und einer vorbestimmten Korrekturfunktion ($f_k$, $h_k$), die eine Änderung eines Parameters, der für das dem Referenzgas zugeordnete Messsignal repräsentativ ist, in Abhängigkeit von der relativen Feuchtigkeit ausdrückt;
- Bestimmen eines Nutzsignals durch Korrektur des der gasförmigen Probe zugeordneten Messsignals auf Grundlage mindestens des bestimmten Korrekturparameters;

- Charakterisieren der Zielverbindungen auf Grundlage des Nutzsignals;

- wobei die erste Charakterisierungsphase eine erste vorgespeicherte Korrekturfunktion ($f_k^{ref0}$, $h_k^{ref0}$) verwendet; wobei die Rekalibrierung eine zweite Korrekturfunktion ($f_k^{ref1}$, $h_k^{ref1}$) bestimmt; wobei die zweite Charakterisierungsphase die bestimmte zweite Korrekturfunktion ($f_k^{ref1}$, $h_k^{ref1}$) verwendet.

9. Elektronische Nase (1) zur Charakterisierung von Zielverbindungen, die zur Umsetzung des Verfahrens zur Rekalibrierung nach den Ansprüchen 1 bis 7 und des Verfahrens zur Verwendung nach Anspruch 8 geeignet ist, umfassend:

- eine Messvorrichtung (20), welche umfasst:

-- eine Messkammer (21), die geeignet ist, eine gasförmige Probe aufzunehmen, welche zu charakterisierende Verbindungen von Interesse enthält, und mindestens eine empfindliche Stelle (23) umfasst, die Rezeptoren aufweist, mit denen die Zielverbindungen durch Adsorption/Desorption wechselwirken können;

-- eine Messeinheit (24, 25), die geeignet ist, ein Messsignal ($S_k(t_i)$), das für die Wechselwirkungen der Rezeptoren mit mindestens dem vorhandenen Gas repräsentativ ist, zu unterschiedlichen Messzeitpunkten als Antwort auf ein Anregungssignal, das im Bereich der empfindlichen Stelle ausgegeben wird, zu bestimmen;

-- einen Feuchtigkeitssensor (26), der geeignet ist, relative Feuchtigkeitswerte des in der Messkammer (21) vorhandenen Gases zu messen;

- eine strömungstechnische Zuführvorrichtung (10), welche umfasst:

-- eine Quelle (11) für ein Referenzgas, die an die Messkammer (21) angeschlossen ist;

-- eine Quelle (12) für Zielverbindungen, die an die Messkammer (21) angeschlossen ist, wobei die gasförmige Probe von einem Gas und Zielverbindungen gebildet wird;

- eine strömungstechnische Rekalibrierungsvorrichtung (40), die mindestens eine Quelle (41) für mindestens ein Referenzgas umfasst, die geeignet ist, der Messkammer (21) Referenzgase zuzuführen, die unterschiedliche relative Feuchtigkeitswerte aufweisen;

- eine Verarbeitungseinheit (30), die geeignet

ist:

-- einen Korrekturparameter ($\tilde{S}_k^b$ ; $\Delta\tilde{S}_k^b$) zu bestimmen auf Grundlage:

--- mindestens eines Messwerts ($\phi 2$) der relativen Feuchtigkeit;

--- einer vorbestimmten und der empfindlichen Stelle ($23_k$) zugeordneten Korrekturfunktion ($f_k$, $h_k$), die eine Änderung eines Parameters ($\tilde{S}_k^b$ ; $\Delta\tilde{S}_k^b$), der für das einem Referenzgas zugeordnete Messsignal repräsentativ ist, in Abhängigkeit von der gemessenen relativen Feuchtigkeit ($\phi$ ; $\Delta\phi$) ausdrückt;

-- ein Nutzsignal ($Su_k(t_i \in Pb)$) durch Korrektur des der gasförmigen Probe zugeordneten Messsignals ($S_k(t_i \in Pb)$) auf Grundlage mindestens des bestimmten Korrekturparameters ($\tilde{S}_k^b$ ; $\Delta\tilde{S}_k^b$) zu bestimmen, und

-- die Zielverbindungen auf Grundlage des bestimmten Nutzsignals ($Su_k(t_i \in Pb)$) zu charakterisieren;

-- die Korrekturfunktion ($f_k$, $h_k$) auf Grundlage der unterschiedlichen relativen Feuchtigkeitswerte des in der Messkammer (21) vorhandenen Referenzgases und der entsprechenden Messsignale ($S_k(t_i)$) zu bestimmen.

## Claims

1. A method for recalibrating an electronic nose (1) adapted to characterise target compounds present in a gas sample introduced into a measurement chamber (21), the same including at least one sensitive site ($23_k$) having receptors with which the target compounds are able to interact by adsorption/desorption, the electronic nose (1) including a processing unit (30) in which a first correction function ($f_k^{ref0}$, $h_k^{ref0}$) expressing a variation in a parameter representative of the measurement signal associated with a reference gas as a function of a relative humidity is pre-recorded, the method including the following steps:

o successively injecting (311, 411), into the measurement chamber (21), reference gases containing no target compounds, the reference gases injected one after the other having different predetermined non-zero relative humidity values ($\varphi$);

o determining (312, 412), during each injection, a measurement signal ($S_k(t_i)$) representative of the interactions of the receptors with the reference gas present, at different measurement times, in response to an excitation signal emitted at the sensitive site ($23_k$), then determining, for each reference gas, a reference value ( $\tilde{S}_k^b$ ) representative of the measurement signal ($S_k(t_i)$) determined, associated with the relative humidity ($\varphi$) of the reference gas present;

o determining (314, 414) a second correction function ( $f_k^{ref1}$, $h_k^{ref1}$ ) expressing a variation in a parameter ( $\tilde{S}_k^b; \Delta\tilde{S}_k^b$ ) representative of the measurement signal associated with the reference gas as a function of the relative humidity ($\varphi; \Delta\varphi$), from the reference values ( $\tilde{S}_k^b$ ) determined and the predetermined relative humidity values ($\varphi$), the second correction function ( $f_k^{ref1}$, $h_k^{ref1}$ ) then being recorded in the processing unit (30) as a replacement for the first correction function ( $f_k^{ref0}$, $h_k^{ref0}$ ).

2. The recalibration method according to claim 1, wherein the reference value ( $\tilde{S}_k^b$ ) is an average of at least part of the corresponding measurement signal ($S_k(t_i)$); and the parameter ( $\tilde{S}_k^b; \Delta\tilde{S}_k^b$ ) representative of the measurement signal is equal to the reference value ( $\tilde{S}_k^b$ ).

3. The recalibration method according to claim 1 or 2, wherein the successive injection step includes at least three injections of different reference gases one after the other, from different reservoirs (41).

4. The recalibration method according to claim 1 or 2, wherein the successive injection step includes an injection of a same reference gas, coming from a reservoir (41) in which it has an initial relative humidity value ($\varphi_{init}$) and passing, before reaching the measurement chamber (21), into a reservoir (43) partially filled with a hydrophilic liquid, so that the reference gas introduced into the measurement chamber (21) has a relative humidity that decreases from the initial value ($\varphi_{init}$) via an intermediate value ($\varphi_{int}$) to a final value ($\varphi_f$).

5. The recalibration method according to claim 1, wherein the successive injection step includes several injection cycles, each cycle being formed by an injection of a first reference gas having a first relative humidity ($\varphi_{1,ref}$) and an injection of different second reference gases having different second relative humidities ($\varphi_j$), so as to obtain several relative humidity deviations ($\Delta\varphi_j$) between each second relative humidity ($\varphi_j$) and the first relative humidity ($\varphi_{1,ref}$), the relative humidity deviations ($\Delta\varphi_j$) being different from one another.

6. The recalibration method according to claim 5, wherein the electronic nose (1) includes a first source ($41_1$) of the first reference gas having a first relative humidity ($\varphi_{1,ref}$), and different second sources ($41_j$) of second reference gases having the different second relative humidities ($\varphi_2$).

7. The recalibration method according to claim 5 or 6, wherein the parameter ( $\tilde{S}_k^b; \Delta\tilde{S}_k^b$ ) representative of the measurement signal is equal to a reference deviation ( $\Delta\tilde{S}_k^b$ ) between reference values ( $\tilde{S}_k^b$ ) associated with the first reference gas and each second reference gas, each reference deviation ( $\Delta\tilde{S}_k^b$ ) being different from the other.

8. A method for using the electronic nose (1), including several phases of characterising the target compounds, including a first characterisation phase carried out before a recalibration implemented by the method according to any one of the preceding claims, and a second characterisation phase carried out after said recalibration, each characterisation phase including the following steps:

o injecting into the measurement chamber (21):

• during a first phase Pa, a reference gas not containing the target compounds, and then
• during a second phase Pb, a gas sample including said target compounds;

o determining, during the injection step, a measurement signal representative of the interactions of the receptors with at least the gas present, at different measurement times, in response to an excitation signal emitted at the sensitive site;

o measuring values $\varphi_1$, $\varphi_2$ of relative humidity respectively during the first and second phases Pa, Pb in the measurement chamber, $\varphi_2$ being different from $\varphi_1$;

o determining a corrective parameter associated with the sensitive site, from at least the relative humidity value $\varphi_2$ measured and a predetermined correction function ($f_k$, $h_k$) expressing a variation in a parameter representative of the measurement signal associated with the reference gas as a function of the relative humidity;

o determining a useful signal by correcting the measurement signal associated with the gas sample, from at least the corrective parameter determined;

o characterising the target compounds from the useful signal;

o the first characterisation phase using a first prerecorded correction function ( $f_k^{ref0}$, $h_k^{ref0}$ ); the recalibration determining a second correction function ( $f_k^{ref1}$, $h_k^{ref1}$ ); the second characterisation phase using the second correction function ( ( $f_k^{ref1}$, $h_k^{ref1}$ ) determined.

**9.** An electronic nose (1) for characterising target compounds, adapted to the implementation of the recalibration method according to claims 1 to 7 and of the method of use according to claim 8, including:

   o a measurement device (20), including:

   • a measurement chamber (21), adapted to receive a gas sample containing compounds of interest to be characterised, and including at least one sensitive site (23) having receptors with which the target compounds are able to interact by adsorption/desorption;

   • a measurement unit (24, 25), adapted to determine a measurement signal ($S_k(t_i)$) representative of the interactions of the receptors with at least the gas present, at different measurement times, in response to an excitation signal emitted at the sensitive site;

   • a humidity sensor (26), adapted to measure relative humidity values of the gas present in the measurement chamber (21);

   o a fluidic supply device (10), including:

   • a source (11) of a reference gas, connected to the measurement chamber (21);

   • a source (12) of target compounds, connected to the measurement chamber (21), said gas sample being formed by a gas and the target compounds;

   o a fluidic recalibration device (40), including at least one source (41) of at least one reference gas, adapted to supply the measurement chamber (21) with reference gases having different relative humidity values;

   o a processing unit (30), adapted to:

• determine a corrective parameter ( $\tilde{S}_k^b$; $\Delta\tilde{S}_k^b$ ) from:

   - at least one measured value ($\varphi_2$) of the relative humidity;
   - a predetermined correction function ($f_k$, $h_k$) associated with the sensitive site ($23_k$), expressing a variation in a parameter ( $\tilde{S}_k^b$; $\Delta\tilde{S}_k^b$ ) representative of the measurement signal associated with a reference gas as a function of the relative humidity ($\varphi$; $\Delta\varphi$) measured;

• determine a useful signal ($Su_k(t_i \in Pb)$) by correcting the measurement signal ($S_k(t_i \in Pb)$) associated with the gas sample from at least the corrective parameter ( $\tilde{S}_k^b$; $\Delta\tilde{S}_k^b$ ) determined, and

• characterise the target compounds from the useful signal ($Su_k(t_i \in Pb)$) determined;

• determine the correction function ($f_k$, $h_k$), from the different relative humidity values of the reference gas present in the measurement chamber (21), and the corresponding measurement signals ($S_k(t_i)$).

**Fig.1A**

**Fig.1B**

**Fig.1C**

**Fig.2A**

**Fig.2B**

**Fig.2C**

**Fig.3**

**Fig.4A**

**Fig.4B**

$\tilde{S}_k(t_i) \rightarrow \Delta \tilde{S}_{k,j}{}^b$

$\varphi_{1,ref}$ ; $\varphi_j \rightarrow \Delta \varphi_j$

20

$f_k$ / $\Delta \tilde{S}_k{}^b = f_k(\Delta \varphi)$

$S_k(t_i)$

$\varphi_1$ ; $\varphi_2 \rightarrow \Delta \varphi$

200

$S_k{}^{b,\varphi 1}$ ; $\Delta \tilde{S}_k{}^b = f_k(\Delta \varphi)$

$Su_k(t \in Pb) = S_k(t \in Pb) - ( S_k{}^{b,\varphi 1} + \Delta \tilde{S}_k{}^b )$

**Fig.5**

**Fig.6A**

**Fig.6B**

**Fig.6C**

$41_1$ $41_2$ $41_3$

1

40

$42_1$ φ1 $42_2$ φ2 $42_3$ φ3

11 13

14

12

2

26 φ 21

3

25 24

20

31

30

**Fig.7A**

100 $h_k^{ref0}$

311 312 $\tilde{S}_{k,m}(t_i) \rightarrow \tilde{S}_{k,m}^b$

300

313 $\varphi_m$

m := m+1

314 $h_k^{ref1} / \tilde{S}_k^b = h_k^{ref1}(\varphi)$

100 $h_k^{ref1}$

**Fig.7B**

40

41 43

$\varphi_{init}$

42

2

**Fig.7C**

$41_{1,ref}$  $41_2$  $41_3$

**Fig.8A**

$200$  $f_k^{ref0}$

$411$  $412$  $\tilde{S}_{k,j}(t_i) \rightarrow \Delta\tilde{S}_{k,j}^b$

$400$

$j := j+1$

$413$  $\varphi_j - \varphi_{1,ref} \rightarrow \Delta\varphi_j$

$414$  $f_k^{ref1} / \Delta\tilde{S}_k^b = f_k^{ref1}(\Delta\varphi)$

$200$  $f_k^{ref1}$

**Fig.8B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018158458 A

- EP 3184485 A

**Littérature non-brevet citée dans la description**

- **BRENET et al.** Highly-Selective Optoelectronic Nose based on Surface Plasmon Resonance Imaging for Sensing Gas Phase Volatile Organic Compounds. *Anal. Chem.,* 2018, vol. 90 (16), 9879-9887

- **SHAO et al.** Mechanism and Characteristics of Humidity Sensing with Polyvinyl Alcohol-Coated Fiber Surface Plasmon Résonance Sensor. *Sensors,* 2018, vol. 18, 2029